(19)

Europäisches Patentamt

European Patent Office

Office européen des brevets

(11) **EP 4 175 216 A1**

(12) **EUROPEAN PATENT APPLICATION**

(43) Date of publication:
03.05.2023 Bulletin 2023/18

(21) Application number: 21204884.7

(22) Date of filing: 26.10.2021

(51) International Patent Classification (IPC):
H04L 9/08 (2006.01)     G06Q 20/40 (2012.01)

(52) Cooperative Patent Classification (CPC):
H04L 9/0872; G06Q 20/40; H04L 2209/56

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Mastercard International Incorporated
Purchase, NY 10577 (US)

(72) Inventors:
• JOHNSON, Alan
  Maldon CM9 8HW (GB)
• COLLINGE, Mehdi
  7141 Mont-Sainte-Aldegonde, Hainaut (BE)

(74) Representative: Lawrence, Richard Anthony et al
Keltie LLP
No.1 London Bridge
London SE1 9BA (GB)

(54) **DATA COMMUNICATION AND CRYPTOGRAPHIC OPERATIONS USING A RESTRICTED DATA CHANNEL**

(57)    A method of processing information relating to an event marked in a data record associated with an entity is described. The data record comprises a date field and a cryptographic record field. First of all, it is determined whether the date field holds a true date or a dynamically generated date by matching the date field against a true date record. If the date field holds the true date, the data record is processed according to a first processing path for static data for the entity. If the date field holds the dynamically generated date, the data record is processed according to a second processing path for dynamic data generated for the event. In processing the data record according to the second processing path, the date control is extracted from the date field, and a data record creation date is determined from the date control. An event counter is then obtained from the date field using the data record creation date. The event counter and the data record creation date are used to validate a cryptographic record in the cryptographic record field. A corresponding method of generating a dynamically generated date and an associated cryptographic record is also described, together with computing nodes adapted to perform such methods.

Figure 20

**Description**

Field of Disclosure

The present disclosure relates to data communication and cryptographic operations using a restricted data channel. In embodiments, the disclosure relates to use of restricted data channels to perform operations for authorisation and management of transactions in a transaction processing system for a transaction scheme.

Background to Disclosure

Complex data processing systems involving multiple entities linked by one or more networks typically require specific protocols for communicating data to ensure that the data is properly recognised and processed throughout the system. These protocols will typically place particular requirements on the different entities in the system, and they will typically develop over time to provide new capabilities and to reflect new technical developments.

It will typically not be practical to upgrade every entity in a distributed system of this type to support every capability of a new version of a protocol as soon as it is established. This is addressed by providing backwards compatibility in new versions of such protocols, so that it is possible to provide continued function using a more restricted set of capabilities than would be needed for full implementation of a latest version of a protocol. An example of this approach is in cellular communication standards - where a part of the system is not adapted to support 4G, backwards compatibility in the protocols allows use of 3G, EDGE or GPRS.

The implementation of transaction schemes has a similar issue. An extended infrastructure connects banks, merchants and cardholders through a series of different networks with a transaction scheme infrastructure mediating the authorisation of a transaction and settlement and clearing processes. The transaction scheme infrastructure itself will be adapted to implement a latest version of a protocol, but particular system elements - for example, the computing hardware of a merchant processing a transaction - may not be. This may require the constraints of an older version of the protocol to be adopted - these may for example include using a limited number of data fields because of significant constraints on the transmission of data in earlier versions of a protocol.

This may be problematic if enhancements to the protocol are for reasons fundamental to the effective technical operation of the system. One such reason may be system security - if an older version of a protocol provides unsatisfactory security, it may be strongly desirable to find a new approach that successfully addresses security concerns - in, for example, secure transmission of data or secure authentication of a user - while still observing the constraints required in older versions of the protocol as these are built into the implementation of particular system elements. In the case of a transaction scheme, an older version of a protocol may for example only be adapted to identify particular elements of a payment card in a transaction (the PAN - Primary Account Number-the expiry date, and the CVC2 code). It would be desirable to address security concerns addressed by more advanced versions of a protocol, while maintaining the constraint that the older protocol imposes on the amount of communicable card data. In particular, it would be desirable to replace static data with dynamic data, varying by transaction, where possible to enhance security. It would also be desirable to do this in such a way that requirements of the transaction scheme - for example, in allowing transaction details to be validated for up to 24 hours after they have been generated - can be met.

Summary of Disclosure

In a first aspect, the disclosure provides a method of processing information relating to an event marked in a data record associated with an entity, wherein the data record comprises a date field and a cryptographic record field, the method comprising: determining whether the date field holds a true date or a dynamically generated date by matching the date field against a true date record; if the date field holds the true date, processing the data record according to a first processing path for static data for the entity, but if the date field holds the dynamically generated date, processing the data record according to a second processing path for dynamic data generated for the event; in processing the data record according to the second processing path: extracting a date control from the date field, and determining a data record creation date from the date control; obtaining an event counter from the date field using the data record creation date; and using the event counter and the data record creation date to validate a cryptographic record in the cryptographic record field.

This approach allows alternative approaches - use of a true date and a dynamically generated date - to be used and distinguished effectively from each other. It also allows information to be conveyed very effectively despite severe constraints on the fields available to convey the information.

In embodiments, a key determined by the data record creation date is used to validate the cryptographic record.

In embodiments, the event may be a service instance - in a specific case of interest, the event is generation of a transaction record or transaction credentials for a transaction performed by the entity. In this case, the event counter may be a transaction counter. The method may then further comprise obtaining a value used as an unpredictable number by a deterministic process from the data record creation date; and using the unpredictable number in validation of the cryptographic record.

Extracting data from the date field may comprise using a bitmask on values stored in the date field, wherein the value of the bitmask is determined by an entity identifier for the entity. If so, and in the case where the event is generation of a transaction record or transaction credentials, the entity identifier may be a primary account number for the entity, where the entity is a cardholder represented by a cardholder account. The value of the bitmask may be retrieved from a lookup table, with a Luhn number of the primary account number used to obtain the value of the bitmask. The value of the bitmask may also be used as a shift value for the event counter, with retrieving the event counter comprising retrieving a value from the date field and correcting for the shift value.

Where the event is generation of a transaction record or transaction credentials, the method may further comprise determining whether the event counter has been extended by detecting an extended event counter flag, and if the event counter has been extended, determining that a part of the cryptographic record field is used for an extended event counter value and that the remainder of the cryptographic record field is used for an abbreviated cryptographic record. In such a case, the entity identifier may be a primary account number for the entity, where the entity is a cardholder represented by a cardholder account, and wherein a Luhn number of the primary account number is used to determine functions of places in the cryptographic record field.

In a second aspect, the disclosure provides a computing node comprising a processor and a memory, wherein the processor is programmed to perform the method of the first aspect using the memory.

In a third aspect, the disclosure provides a method of communicating information relating to an event using a data record associated with an entity, wherein the data record comprises a date field and a cryptographic record field, the method comprising: identifying a data record creation date; using the data record creation date and a true date record to generate a date control; using the date control and an event counter to generate a dynamically generated date and storing it in the date field; using the event counter and the data record creation date to generate a cryptographic record and storing it in the cryptographic record field; and communicating a message including the date field, wherein a recipient of the message with access to the true date record can recover the data record creation date and the event counter from the dynamically generated date and can validate that the elements are correctly recovered by recalculating the cryptographic record from the recovered data record creation date and the event counter and matching the recalculated cryptographic record with the cryptographic record recovered from the data field.

In embodiments, a key determined by the data record creation date is used to generate the cryptographic record.

In embodiments, the event may be a service instance - in a specific case of interest, the event is generation of a transaction record or transaction credentials for a transaction performed by the entity. In this case, the event counter may be a transaction counter. The method may then further comprise obtaining a value used as an unpredictable number by a deterministic process from the data record creation date; and using the unpredictable number in generation of the cryptographic record.

In embodiments, storing a dynamically generated date in the date field further comprises using a bitmask determined by an entity identifier for the entity to modify values in the dynamic date before storage. If so, and in the case where the event is generation of a transaction record or transaction credentials, the entity identifier may be a primary account number for the entity, where the entity is a cardholder represented by a cardholder account. The value of the bitmask may be retrieved from a lookup table, with a Luhn number of the primary account number used to obtain the value of the bitmask. The value of the bitmask may also be used as a shift value for the event counter, wherein a shift value is added to the event counter before storing it as part of the dynamically generated date.

Where the event is generation of a transaction record or transaction credentials, the method may further comprise storing an extended event counter by setting an extended event counter flag and by using part of the cryptographic record field for an extended event counter value and by using the remainder of the cryptographic record field for an abbreviated cryptographic record. In such a case, the entity identifier may be a primary account number for the entity, where the entity is a cardholder represented by a cardholder account, and wherein a Luhn number of the primary account number is used to determine functions of places in the cryptographic record field.

In a fourth aspect, the disclosure provides a computing node comprising a processor and a memory, wherein the processor is programmed to perform the method of the third aspect using the memory.

Description of Specific Embodiments

Specific embodiments of the disclosure are now described, by way of example, with reference to the accompanying drawings, of which:

Figure 1 shows a general approach adopted by elements of the disclosure in addressing technical problems associated with the communication of sensitive data over a restricted data channel;

Figure 2 shows schematically a distributed transaction architecture using a four-party model;

Figure 3 illustrates elements of a complex distributed system adapted to implement the transaction architecture of Figure 2;

Figure 4 shows schematically an exemplary system for enabling digital transactions in the transaction architecture of Figures 2 and 3;

Figure 5 illustrates an Expiry Date field as used in EMV protocols;

Figure 6 illustrates alternative strategies for repurposing an Expiry Date field and associated validity challenges;

Figure 7 illustrates a general approach for generation, transport and validation of dynamic transaction data (DTD);

Figure 8 illustrates schematically a process for generation of dynamic transaction data;

Figure 9 illustrates one approach to Unpredictable Number generation usable in the process of Figure 8;

Figure 10 illustrates an alternative approach to Unpredictable Number generation usable in the process of Figure 8;

Figure 11 illustrates in more detail the process of Dynamic CVC generation shown in Figure 8;

Figure 12 illustrates schematically an existing process for validation of dynamic transaction data;

Figure 13 illustrates an approach to expiry date management according to an embodiment of the disclosure;

Figure 14 is a flow diagram initiating different processing options for consumer-initiated and merchant-initiated transactions;

Figure 15 shows a different approach to dynamic expiry date generation according to an embodiment of the disclosure;

Figure 16 shows steps in generating a dynamic expiry date using the structure of Figure 15;

Figure 17 shows an alternative approach to CVC generation suitable for use with a token according to the present disclosure;

Figure 18 illustrates a process for generating an Unpredictable Number according to an embodiment of the present disclosure;

Figure 19 illustrates the steps in generation of parameters for a token according to an embodiment of the present disclosure;

Figure 20 illustrates the steps in validation of a token according to an embodiment of the present disclosure;

Figure 21 illustrates use of a date control in the validation approach of Figure 20;

Figures 22A and 22B illustrate the generation and ranking of ATC candidate values in the validation approach of Figure 20;

Figure 23 illustrates schematically an arrangement for a distributed system for digital enablement of transactions;

Figure 24 illustrates a computing node of the arrangement of Figure 23 in more detail;

Figure 25 illustrates elements within the computing node of Figure 24;

Figure 26 indicates transaction flow in relation to operations performed by the node of Figure 24;

Figure 27 indicates use of tokenization in the arrangement of Figures 24 to 26;

Figure 28 indicates an approach to key management used in the arrangement of Figures 23 to 27;

Figure 29 illustrates an exemplary approach to transaction identification;

Figure 30 illustrates an exemplary set of cryptographic mechanisms for use for digitized transactions in the arrangement of Figures 23 to 29;

Figure 31 illustrates a global model of key management with individual modes managed as shown in Figure 28;

Figure 32 illustrates a global model of monitoring associated with the key management model of Figures 28 and 31;

Figure 33 shows management of a second layer of encryption in a node as shown in Figure 24;

Figure 34 shows how the use of encryption and decryption varies between the node of Figure 24 and the node of Figure 33;

Figure 35 shows the relationships between transaction data and encrypted material in the approach shown in Figure 33;

Figures 36A and 36B illustrate respectively a node profile and a service profile within a node profile following the approach shown in Figure 33;

Figures 37A and 37B illustrate elements of a key list profile for use in the node profile of Figure 36A;

Figures 38A and 38B compare respectively a transaction key list and an encryption key list used in the process of Figure 33;

Figure 39 summarises the different types of action that can be taken using the modified process of Figure 34;

Figure 40 indicates a context for expiry date and cryptogram management for use in the arrangement of Figures 33 to 39;

Figure 41 shows the use of a bitmask and shift value in an embodiment of the disclosure in accordance with Figure 40; and

Figure 42 shows application of Luhn-based obfuscation as shown in Figure 40 to other data fields.

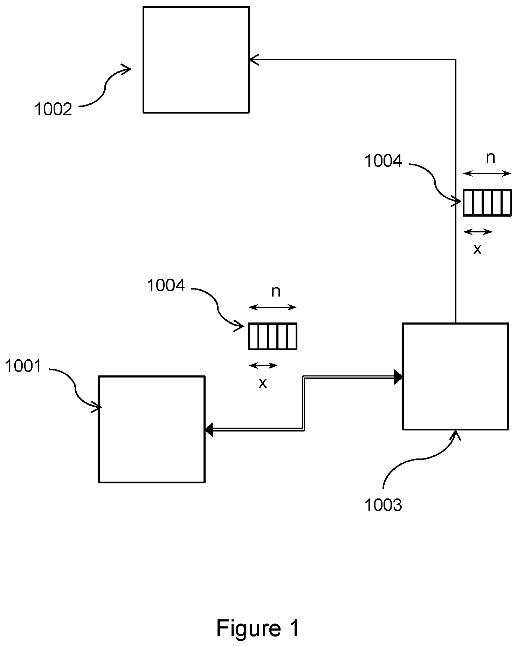

In general terms, the problem addressed by the disclosure is illustrated in Figure 1. A first computing entity 1001 generates sensitive data which it wishes to be available to second computing entity 1002 for validation. Communication needs however to be mediated through a third computing entity 1003, with this communication involving a restricted data channel 1004.

There are at least two possible ways in which the data channel 1004 may be restricted. One is that the overall amount of data that can be transmitted is limited - in this case, the data channel only contains n places for data of a particular type to be transmitted. The other is that there may be constraints on the values that can be used in a particular field. In this case, x places of the total n places are constrained in the values that can be accepted.

In embodiments, information to meet security requirements is carried by repurposing original data fields. In particular, data fields for static data may be reused for dynamic data which contains information for use in additional security protocols. Both types of constraints create technical challenges. The limited number of places makes it difficult to convey the required amount of information. Various mechanism may be used to address this. One is conveying a limited amount of information directly, but by including a check mechanism - such as a hash - to ensure that the generator and the validator are performing the same calculation on the same data. In addition, the original purpose of a repurposed data field may create constraints on the values that can be used, particularly if the third computing entity 1003 continues to behave as though the original protocol is in place, and it is checking data accordingly.

One example of problems caused by a repurposed field is where the original field is for a date. One example is in a transaction scheme, where one transaction data field is for the expiry date of the relevant payment card, represented in MMYY format. If the first computing entity 1001 is a payment card or other payment device, the second computing entity 1002 is the authoriser of the transaction (an issuing bank or transaction scheme infrastructure acting on behalf of the issuing bank), while the third computing entity 1003 is a merchant point of sale terminal, then the third computing entity 1003 may be programmed to reject the potential transaction without forwarding it for authorisation if the expiry date is clearly incorrect - for example, if the month value is impossible, or the year value is too far into the future or in the past. Any reuse of such a field needs to ensure that the third computing entity 1003 does not prevent the data from even passing through the restricted data channel to the second computing entity 1002.

This combination of constraints can provide significant technical challenges as in order to meet security requirements, dynamic data changing from event to event may be desirable, rather than static data. One important security mechanism is for validity of credentials to be time limited. This requires time information in some form to be included in data transmitted from generator to validator. Length of validity of information also poses a challenge - the longer the period of validity, the more information that will typically need to be transferred, particularly if other relevant criteria - such as the cryptographic keys used for encoding - change over the validity period.

Embodiments of the disclosure illustrate different strategies for repurposing a limited number of fields, at least some of which are constrained, to contain dynamic data. Approaches include providing least significant bit data of key variables, and by then enabling reconstruction of the full key variables from known data. Approaches also include incorporation of combination of variable data with time data, and by establishment of the variable data by subtracting the time data. In such cases, it may be possible for the recorded time value to be different from the current time value - this may happen where there is an extended validity period, and where transactions may be held before transmission or where data may be provided out of sequence. The variation in time value will then be limited, and so may be addressed by an iterative retry process or by inclusion of check data.

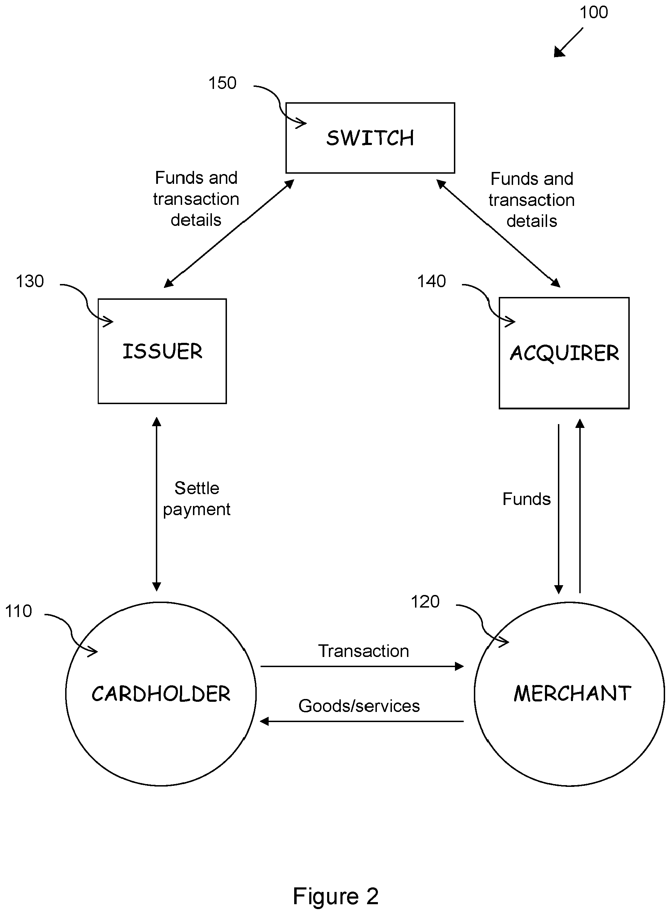

Embodiments will be described in more detail in the context of a transaction scheme. A suitable transaction scheme and infrastructure will first be described in more detail. Figure 2 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of an online transaction). Once the additional verification process is complete the transaction is authorized.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

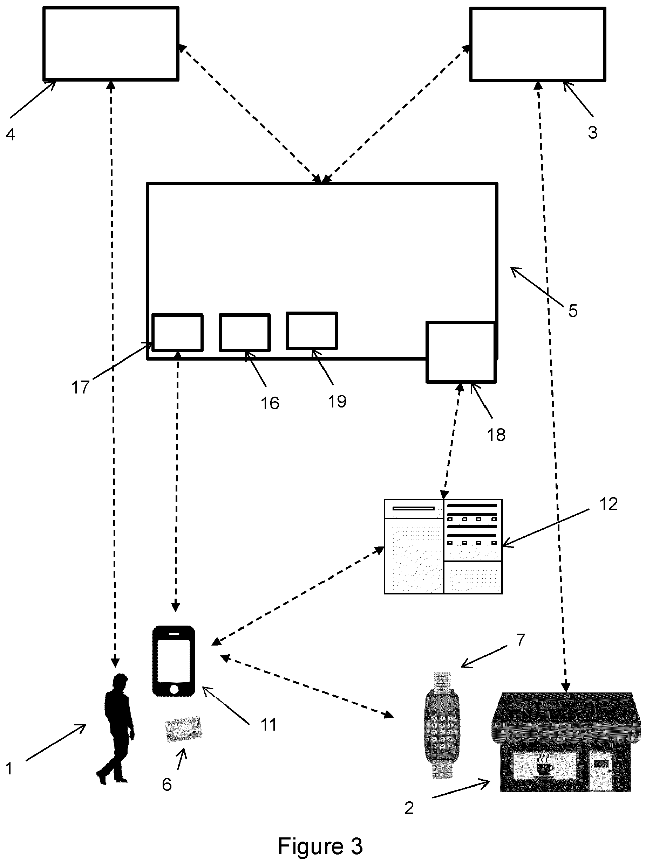

Figure 3 shows an architecture appropriate for interaction between a cardholder and a merchant. This Figure shows a general-purpose architecture for reference, but it shows elements of an architecture used when a cardholder carries out an online transaction with a merchant server.

For a conventional transaction, a cardholder will use their payment card 6 - or a mobile computing device such as smartphone 11 adapted for use as a contactless payment device - to transact with a POS terminal 7 of a merchant 2. However, in embodiments relevant to the present invention, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use this to transact with a merchant POS terminal 7 using NFC or another contactless technology, or to make a payment in association with its wallet service as discussed below. However, online transactions with a merchant are of particular interest in connection with embodiments of the disclosure, rather than contact or contactless transactions with a merchant POS terminal 7. To make an online transaction, the smartphone 11 may also be able to interact with a merchant server 12 representing the merchant 2 over any appropriate network connection, such as the public internet - the connection to the merchant may be provided by an app or application on the computing device.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet-based transactions for processing by the transaction infrastructure. In other embodiments, the wallet service 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

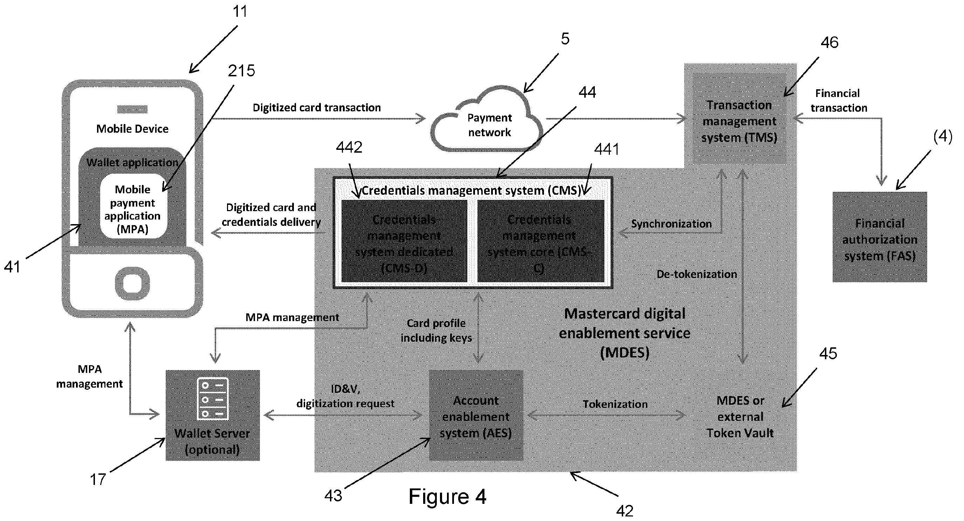

Figure 4 shows elements of a transaction infrastructure to support digitized payments from a mobile device in more detail. This Figure shows as a specific example the applicant's Mastercard Cloud-Based Payment (MCBP) architecture - this is exemplary rather than specific to the invention, and it illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions. The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitisation and user establishment. It will interact with the mobile payment application (here through the wallet server 17) for card digitisation requests and will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46 which detokenizes the transaction by using the Token Vault 45. The detokenized transaction is then routed to the issuer (here represented by Financial Authorisation System 47) for authorisation in the conventional manner. The TMS 46 also interacts with the CMS 44 to ensure synchronisation in relation to the cardholder account and credentials.

Embodiments of the disclosure may be performed using the architecture shown in Figures 3 and 4. As previously noted, digital transactions such as those made in online commerce are of particular interest. In online commerce, a consumer will typically be interacting with a merchant server through a website over the browser (or a specific app) on the user's computing device. The user will use their credit card for a transaction, but the card will not be present and the consumer is here not transacting through a payment application on their own computing device but is using the payment card in a manner similar to a conventional "cardholder not present" (CNP) transaction, in which the merchant receives specific details of the payment card, but will not receive an application cryptogram generated by the payment card itself, or by a payment application on a user computing device.

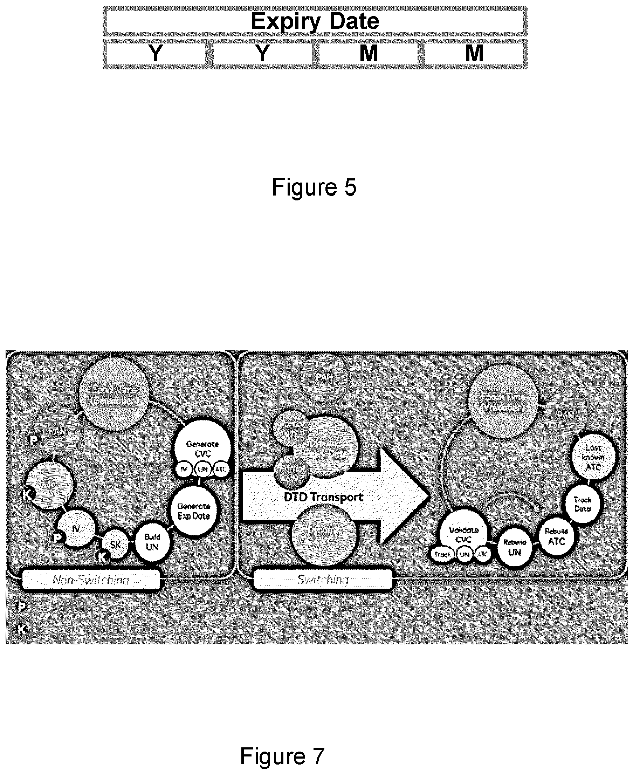

In such cases a possible limitation is that a system entity such as the merchant server - or a payment service provider gateway supporting the merchant - may be operating under an old protocol version, and so will only be able to support very limited provision of payment card data. An approach to managing the provision of dynamic data using limited data fields allowed by older protocol versions is described with reference to Figures 5 to 12. This approach relates to performance of digital transaction using a transaction scheme, and it is applicable to online payment as described above - it has particular relevance to online commerce, and in particular to Secure Remote Commerce (SRC - https://www.emvco.com/emv-technologies/src/), which is a set of specifications developed by or for EMVCo that provide a secure approach to the processing of e-commerce transactions. Using SRC, a transaction may be identified by Dynamic Token Data (DTD), where the transaction is performed using a token (managed by an architecture as shown in Figures 3 and 4) rather than a PAN and content is varied with each transaction. Cardholder authentication is performed using a separate mechanism, 3DS (a version of 3-D Secure, discussed for example at https://en.wikipedia.org/wiki/3-D Secure, suitable for use for cardholder authentication in Card Not Present (CNP) transactions). The DTD data needs therefore to be sufficient to identify the transaction and to allow an authoriser to determine that the transaction is legitimate, and it is desirable for DTD data generation to be independent of the 3DS process (preferably so that this could be done either before or after any call to the 3DS process).

As in the example discussed above, it is assumed that only legacy fields in transaction data are available for DTD data: PAN, Expiry Date and CVC2. The DTD data should be such that the content varies with each transaction but that there is a clear binding to the relevant token used, and while the data does not need to be an EMV cryptogram of an existing type it needs to be such that legitimacy of the transaction can be verified.

Exemplary content of Dynamic Token Data - in particular, of Dynamic Expiry Date and Dynamic CVC forming part of Dynamic Token Data - will now be described, as will processes for generation and validation of these values in the context of a Secure Remote Commerce transaction. It should be noted that this approach is applicable to any product or service using a tokenized transaction and is not limited to SRC, and that where reference is made to SRC transactions below the person skilled in the art will appreciate that there is no intention to limit the use of the functionality described to the context of an SRC transaction. A further use case for Dynamic Token Data - application in the NODES architecture for fully digital transactions - will also be described further below.

As noted previously and as shown in Figure 5, Expiry Date comprises four values in the form YYMM, with YY used to carry "year" information (YY being a two-digit value between 00 and 99) and MM used to carry "month" information (MM being a two-digit value between 01 and 12). In the original legacy EMV context, this was a static value, defining the lifetime of a (physical) payment card, the card ceasing to be valid after the expiry date had passed.

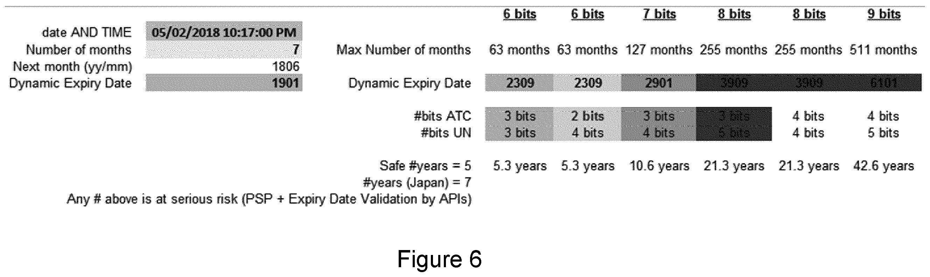

An intermediary computing system using a legacy version of the protocol - a Payment Service Provider or a merchant server - may invalidate a transaction if the Expiry Date value appears to be invalid or impossible. This poses a significant restraint on the dynamic data that can be carried in this field - the dynamic data must correspond to a possible date, this date must not be in the past, but it must also not be too far into the future to be credible. If 6 bits of data are carried, this would require date values to be up to 5-6 years into the future - these should not be rejected by legacy systems. However, to use 7 bits would require expiry dates up to 10 years into the future, 8 bits 20 years and 9 bits 40 years - a 7-bit solution would risk failure whereas an 8- or 9-bit solution would not be viable. This is illustrated in exemplary form in Figure 6.

There are two data types that it would be desirable to carry in the Expiry Date field. One is Application Transaction Counter (ATC) data - this has been described above and is a counter provided at a transaction data generator incremented on the creation of relevant transaction data. The other is Unpredictable Number (UN) data. The Unpredictable Number is a value used to provide variability and uniqueness in cryptogram generation - different methods of UN generation are possible, with the overall size of the UN and the unlikelihood of the process to generate it being replicated by an attacker being the main factors in security. The ATC and UN values are used to generate a cryptogram in a DTD transaction, and are recovered by the entity responsible for validation of the dynamic token data.

As also noted previously, CVC2 (the Card Security Code) is a three digits field originally used to carry a static 3-digit value between 000 and 999 - it is printed on the rear side of a conventional payment card and used as a confirmation that the cardholder is making the transaction as the cardholder is expected to have physical possession of the payment card.

Using Dynamic Token Data, this static value is replaced by a Dynamic CVC - this is a 3-digit cryptogram generated as part of a DTD transaction.

DTD generation, transport and validation processes will now be described with reference to Figure 7. In the generation and validation processes, the relevant computing entities are adapted to perform current versions of EMV protocols and are aware of and adapted to perform the relevant DTD process functions. In the transport process, however, it is necessary for the transport of DTD related data not to impact any transport of EMV transaction data and/or 3DS transaction data if the latter is used as part of the transaction flow.

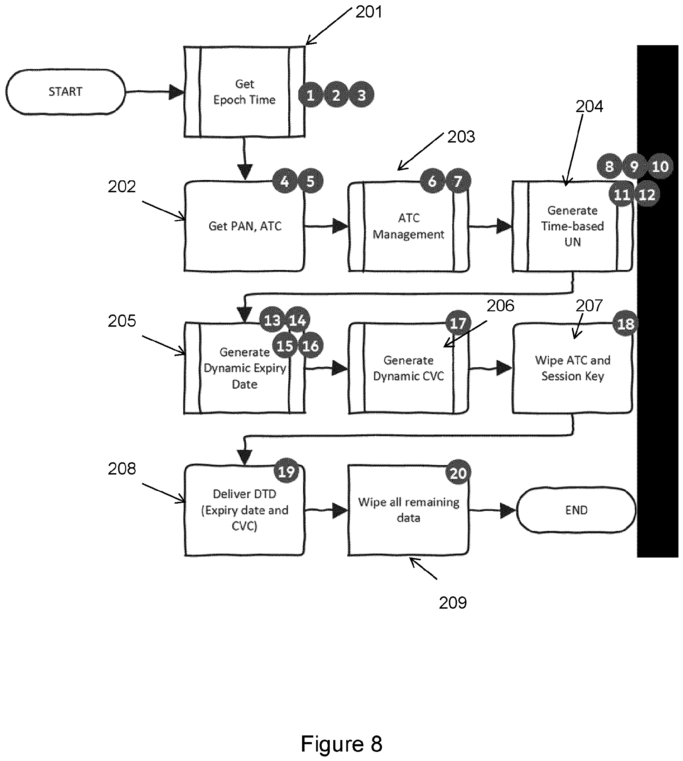

An existing DTD generation process is described in detail below with reference to Figure 8. The generator has access to information from the card profile: here, the relevant data is the PAN (or Token), referred to here as *dtdToken;* and the initial vector (IV) used for DTD transactions *ivCvcTrackDtd.* The initial vector can be generated using a cryptographic operation over a list of data containing for example some identification of the token such as defined when using track data including PAN, Service Code, Static Expiry Date and so on. The generator will also be able to provide unique transaction credentials for the DTD transaction: the ATC *dtdATC;* and a session key SK. There will also be a list of parameters associated with the transaction: optional additional data shared between generator and validator *dtdAdditionalData;* the number of bits of ATC carried using Dynamic Expiry Date *dynamicExpiryDateNbrATCBits;* and the number of bits of UN (which as will be shown below is time-based in this implementation) carried using Dynamic Expiry Date *dynamicExpiryDateNbrUNBits.*

Referring to Figure 8, an existing process for generating Dynamic Token Data is described. Firstly, an Epoch Time value is obtained 201. The initial value obtained is the Unix Epoch Time when Dynamic Token Data generation is initiated - here *dtdGenUET.* This is the number of seconds elapsed since midnight (UTC) on January 1, 1970, ignoring leap seconds. This value is adjusted by an appropriate ratio to provide a value *dtdAdjGenUET* and a reference time is obtained by using modulo 100000 of the adjusted Unix Epoch Time to provide a value *dtdRefTimeGenUET.*

After this, the Card Profile data needed is obtained 202 - this comprises the value of the PAN/Token *dtdToken* and the value of the ATC of the session key (SK) to be used to generate the DTD Dynamic CVC, *dtdATC.*

The relevant part of the ATC is then extracted and reformatted 203. The n least significant bits (rightmost) of the ATC are extracted as *dtdLSbATCBin,* with n defined by the parameter *dynamicExpiryDateNbrATCBits.* This value *dtdLSbATCBin* is then converted to a decimal value *dtdLSbATCNum.*

The next step is to generate 204 a time-based unpredictable number. To do this, a buffer is created of the token value and the relevant part of the ATC:

$$\text{Buffer} = \textit{dtdToken} \mid \textit{dtdLSbATCNum}$$

If optional data *dtdAdditionalData* is non-zero, this may be appended to the right of the buffer - padding may also be used to make the length of the buffer even. This buffer is then hashed using SHA256 to form *dtdGenHash,* after which the buffer is wiped. Other choices could be made for the hash - for example, SHA512 could be used rather than SHA256, or another hashing mechanism such as SM3 could be used.

As for the ATC previously, the m least significant bits of the hash are extracted as *dtdLSBGenHash* and converted to a numerical value *dtdLSBGenHashNum.* This is then converted to a modulo 100000 value *dtdLSBGenHashNumMod* and the time-based unpredictable number is calculated by adding this value to the time value module

100000.

$$dtdGenUN = (dtdRefTimeGenUET + dtdGenHashNumMod)\ MOD\ 1000000$$

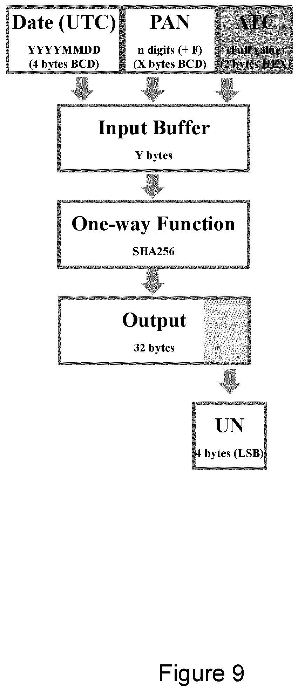

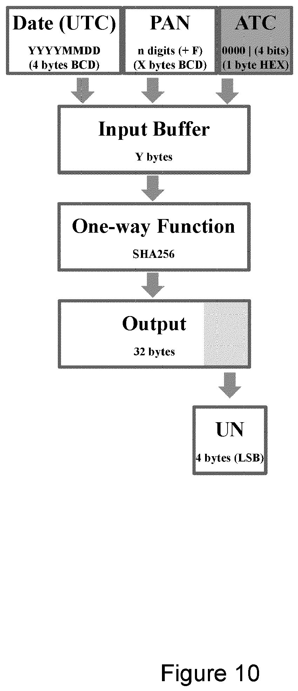

A number of variations are possible in generating the Unpredictable Number, as shown in Figures 9 and 10 - these show other approaches which both take a different form of the UTC date, but which take two different approaches to including ATC data. In both variations, a Y byte buffer is constructed from a 4-byte BCD (binary coded decimal) UTC date - in this case, in YYYYMMDD format - and appropriate PAN and ATC contributions. In both cases, the PAN is provided as an n digit value, padded if necessary, from which an X byte BCD value is formed. The approach to providing an ATC value differs, however: in the first case shown in Figure 9, the full ATC value is used and provided as a 2-byte hexadecimal value, whereas in the second case shown in Figure 10, the least significant 4 bits are provided and form a 1-byte hexadecimal value. In both cases, these are used to form a Y byte input buffer on which a one-way function (such as SHA256) operates to provide a 32-byte output, with the four least significant bits used to provide the unpredictable number. The skilled person will be aware that the principles applied here may be implemented with minor variations to provide other implementations of an Unpredictable Number generation process.

All the elements are now available for the Dynamic Expiry Date to be generated 205. An existing approach will first be described, with modifications provided in embodiments of the disclosure discussed below. The n least significant bits are extracted from the reference time - n is defined by *dynamicExpiryDateNbrUNBits* and the resulting output is *dtdRefTimeGenUETBin.* The ATC and time values are then expressed as a number of months:

$$dtdGenNbrMonthsBin = dtdLSbATCBin\ |\ dtdRefTimeGenUETBin$$

This binary value is then converted to a numerical value *dtdGenNbrMonths.* The next month is identified using *dtdGenUET,* and expressed as a value *dtgGenYYMM Next,* which is *dtdGenYYMM* + 1. The Dynamic Expiry Date is calculated by simply adding the numerical value calculated to the next month value:

$$dtdDynamicExpiryDate = addMonths\ (dtdGenYYMMNext, dtdGenNbrMonths)$$

with *dtdGenYYMMNext* the reference, and *dtdGenNbrMonths* the number of months to be added. Using this approach, the Dynamic Expiry Date will appear to be legacy processors to be a valid Expiry Date, as it has the correct format, does not lie in the past, and does not lie too far into the future.

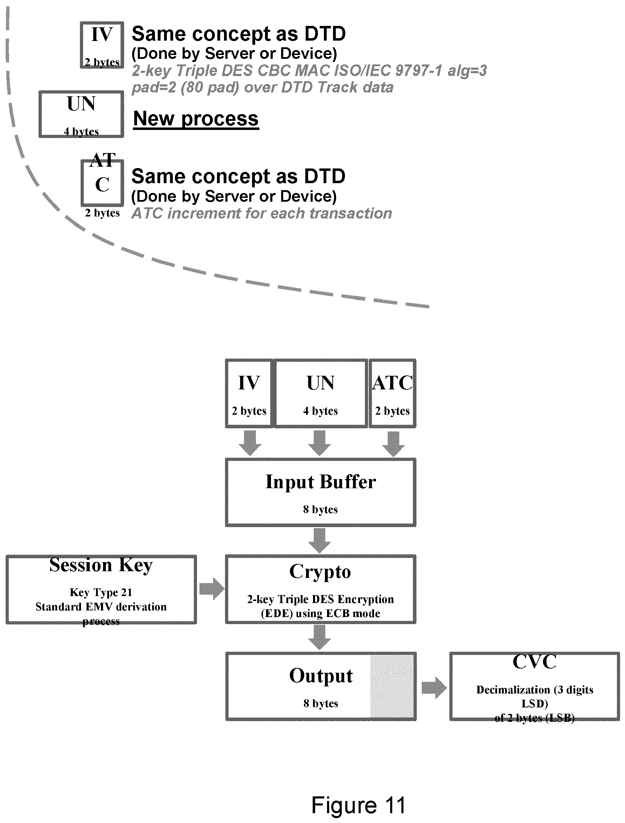

The next step is to generate 206 the DTD Dynamic CVC. This process is also shown in Figure 11. An 8-byte input buffer is formed from the concatenation of the IV value *ivCvcTrackDtd,* the 4-byte time-based UN *dtdGenUN* and the 2-byte ATC value *dtdATC.* The dynamic CVC value is then computed cryptographically from the buffer using the session key SK by an appropriate cryptographic process, such as DES3 (a 2-key Triple DES Encryption (EDE) using ECB mode), with the three least significant digits of the 8-byte result, expressed in decimal, used as the CVC. This may be expressed as:

$$dtdDynamicCVC = LSD(3,Byte2Dec(LSB(2,DES3(SK)[buffer])))$$

where LSB(n,X) is the least significant n bytes of byte string X and Byte2Dec(X) converts a string of bytes to an integer expressed in decimal (for example, Byte2Dec('C07E-) = 49278). LSD(n,D) is the least significant n bits of an integer expressed in decimal. The buffer can be wiped once the Dynamic CVC value has been created

After this the ATC value and the session key can be wiped 207, and the DTD values delivered 208 to the merchant (and so to the acquirer) as transaction data for use in an online authorization request for the transaction: a PAN (Token) value *dtdToken,* an Expiry Date value using DTD Dynamic Expiry Date *dtdDynamicExpiryDate,* and CVC2 using DTD Dynamic CVC *dtdDynamicCVC.* After this, all remaining data used in this process can be wiped 209.

The transport process is straightforward, as all transaction data has the format of legacy transaction data. If the merchant or the acquirer or any associated system entity (such as the merchant's payment service provider (PSP)) is only adapted to use legacy versions of the protocol, this will not affect the routing of the transaction data from the merchant to the acquirer to the transaction scheme for authorisation. At this point, the dynamic token data needs to be validated.

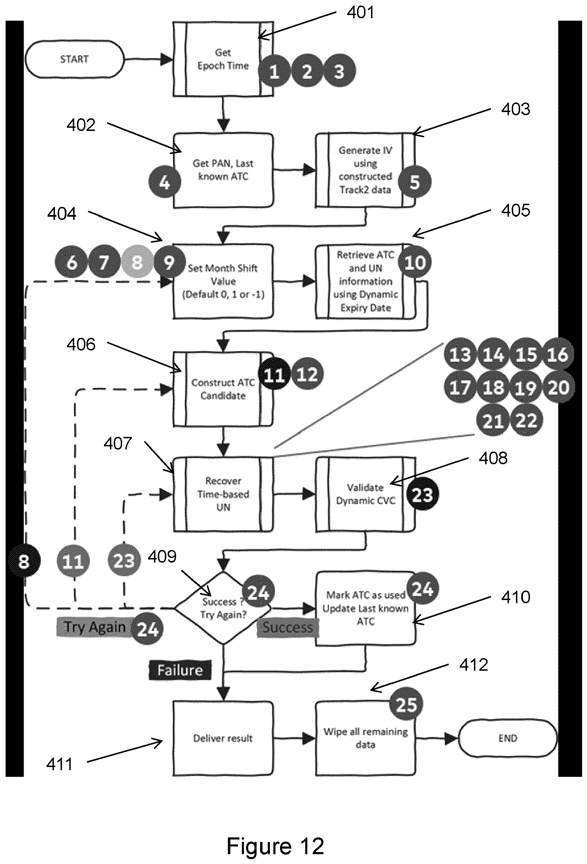

This validation process for this existing token type is described in detail in Figure 12 - validation is specifically required of the DTD Dynamic CVC value *dtdDynamicCVC,* which is provided to the validator through the CVC2 field along with the *dtdToken* and *dtdDynamicExpiryDate* values provided through the PAN(Token) and Expiry Date fields respectively from the transaction date provided in the legacy formatted EMV Authorisation Request.

The validator will have access to various information, and also to a HSM (Hardware Security Module) capable of performing necessary cryptographic computation. Specifically, these resources are as follows.

The validator has access to the following information associated with the PAN(Token):

> o Cryptographic Keys such as the Issuer Master Key: IMK
> o Last known ATC: *dtdLastKnownATC*
> o Information to construct the Track data *(trackDtd)* that will be used to generate the IV value *(ivCvcTrackDtd)* using the following values:
>
> > □ *trackDtdExpiryDate:* "xxxx" value in "trackDtd"
> > □ *trackDtdServiceCode:* "yyy" value in "trackDtd"
> > □ *trackDtdPanSequenceNumber.* "z" value in "trackDtd"

where the *(trackDtd)* is a 19-byte value: "<PAN>Dxxxxyyyz000000000000F"

with <PAN> set to *dtdToken,* D defined as a delimiter and "000000000000F" defined as a filler.

The person skilled in the art will appreciate that the format is similar to what is commonly used to create Track 2 data, but any equivalent mechanism can be used to identify the token.

The validator has access to the following list of parameters:

> o Any optional additional data shared between the "generator" and the "validator": *dtdAdditionalData* (may be unused in a simplified version)
> o Number of bits of ATC carried using Dynamic Expiry Date: *dynamicExpiryDateNbrATCBits* (may be set to 3 in simplified version)
> o Number of bits of time-based UN carried using Dynamic Expiry Date: *dynamicExpiryDateNbrUNBits* (may be set to 3 in simplified version)
> o Threshold for adjustment (up) of Expiry Date in case of failure of DTD Validation: *dtdMonthShiftUpThreshold,* a value hh:mm:ss PM expressed using GMT timezone (eg 11:55:00 PM GMT)
> o Threshold for adjustment (down) of Expiry Date in case of failure of DTD Validation: *dtdMonthShiftDownThreshold,* a value hh:mm:ss AM expressed using GMT timezone (eg 00:05:00 AM GMT)

The HSM is able to generate a Card Master Key (CMK) and Session Key (SK) from the Issuer Master Key (IMK), to generate the IV from track data as indicated above and the Card Master Key (CMK), and to use the Session Key SK, IV, UN and ATC for CVC Validation.

The operations performed by the validator are illustrated generally in Figure 12, and these are described in detail below. First of all, time information must be obtained 401. This can be carried out in exactly the same way as for the generator, as exactly the same information is available. The PAN(Token) value can simply be extracted 402 from the transaction data as *dtdToken.* The IV value can also be reconstructed 403 from the DTD transaction data, as this contains everything needed to reconstruct the Track data *(trackDtd)* used to generate the IV value *(ivCvcTrackDtd).* The value *trackDtd* is a 19-byte value "<PAN>Dxxxxyyyz000000000000F" used to identify the token being used for the transaction with xxxx being trackDtdExpiryDate (a static value that is not linked to the dynamic expiry date used in the context of DTD transactions), yyy trackDtdServiceCode (a static value used in legacy system to qualify the supported services for a transaction) and z trackDtdPANSequenceNumber (a static value that can be used to identify several cards sharing the same PAN value).

The next step is special to the validation process, and involves setting 404 the month shift value, which may be 0 (the default), 1 or -1. The first part of this is to establish the next month value *dtdValYYMMNext* by adding one to the current time *dtdValYYMM,* which is the YYMM format of *dtdValUET.* The DTD Dynamic Expiry Date *(dtdDynamicExpiryDate)* is then retrieved from DTD transaction data, and the next month value is subtracted from this to give the number of months computed by the generator - *dtdGenNbrMonths.*

The next step is to try to establish whether the month shift value is correct, which is determined by establishing whether or not the DTD Dynamic CVC can be validated, as discussed further below. The number of months is converted to a binary value *(dtdGenNbrMonthsBin)* and available ATC and UN information is extracted 405 from the DTD Dynamic Expiry date - the n most significant bits of *dtdGenNbrMonthsBin* form the n least significant bits of the ATC *dtdLSbATCBin,* and the m least significant bits of *dtdGenNbrMonthsBin* form the m least significant bits of the reference time *dtdRefTimeGenUETBin,* where n is defined by *dynamicExpiryDateNbrATCBits* and m is defined by *dynamicExpiryDateNbrUNBits.*

The next step after this is to construct 406 an ATC candidate from this data. This is done by retrieving the last known ATC value *dtdLastKnownATC* for that PAN(Token) *dtdToken,* which the validator will have access to through previous validation processes. The last known ATC value and the retrieved ATC information from the Dynamic Expiry Date will be used together to reconstruct the candidate ATC value *dtdCandidateATC,* typically the lowest value consistent with the ATC information from the Dynamic Expiry Date but higher than the last known ATC value. This is then converted to a decimal value *dtdLSBATCNum.*

The relevant elements are all available to recover 407 the time-based UN by replicating the process used to create it. As before, a temporary buffer is created of the token value and the relevant part of the ATC:

$$Buffer = dtdToken \mid dtdLSbATCNum$$

If optional data *dtdAdditionalData* is non-zero, this may be appended to the right of the buffer - padding may also be used to make the length of the buffer even. This buffer is then hashed using SHA256 to form *dtdValHash,* after which the buffer is wiped.

The three least significant bits of *dtdValHash* are extracted as *dtdLSBValHash* and converted to a numerical value *dtdLSBValHashNum.* This is then expressed in modulo 100000 as *dtdLSBValHashNumMod.* To create an Unpredictable Number candidate, the n least significant bits of *dtdRefTimeValUET* are masked (with n defined by dynamicExpiryDateNbrUNBits) and a first candidate for UN reconstruction *dtdCandidateUN* created, where

$$dtdCandidateUN = dtdRefTimeValUETMasked + dtdRefTimeGenUETBin$$

At this point, additional candidates for UN reconstruction are also created: *dtdCandidateUN"-1", dtdCandidateUN"-2"* and *dtdCandidateUN"+1".* These have the following values:

- *dtdCandidateUN"-1" = dtdCandidateUN* - power(2,n)
- *dtdCandidateUN"-2" = dtdCandidateUN* - power(2,n+1)
- *dtdCandidateUN"+1"= dtdCandidateUN* + power(2,n)

These four candidates have the following recovered UN values: *dtdRecoveredUN, dtdRecoveredUN"-1", dtdRecoveredUN"-2"* and *dtdRecoveredUN"+1",* where:

- *dtdRecoveredUN = (dtdLSBValHashNumMod + dtdCandidateUN)* MOD 100000

- *dtdRecoveredUN"-1" = (dtdLSBValHashNumMod + dtdCandidateUN"-1")* MOD 100000

- *dtdRecoveredUN"-2" = (dtdLSBValHashNumMod + dtdCandidateUN"-2")* MOD 100000

- *dtdRecoveredUN"+1" = (dtdLSBValHashNumMod + dtdCandidateUN"+1")* MOD 100000

These are respectively the UN values for the most current possible generation time and the two earlier candidate times, and the next available time in the future compared to validation (possible in the event of out-of-sequence events). The next step is to compute the deltas between the reference time for validation of Dynamic Token Data and the list of candidates for UN reconstruction as above:

- *dtdValDelta = dtdRefTimeValUET - dtdCandidateUN*

- *dtdValDelta"-1" = dtdRefTimeValUET - dtdCandidateUN"-1"*

- *dtdValDelta"-2" = dtdRefTimeValUET - dtdCandidateUN"-2"*

- *dtdValOelta"+1" = dtdRefTimeValUET - dtdCandidateUN"+1"*

Times will then be ranked, with "past" times ranked over "future" ones

The next step is to attempt to validate 408 the DTD Dynamic CVC. To do this, the following are used:

- Track data (19 bytes): *trackDtd* - this is known;
- Recovered UN (4 bytes): *dtdRecoveredUN* - this is the current "best" candidate

- Candidate ATC (2 bytes): *dtdCandidateATC* - this is again the current "best" candidate

The DTD Dynamic CVC is validated using a cryptographic function that compares the supplied Dynamic CVC against a computed CVC value using an 8-byte buffer created with the concatenation of *ivCvcTrackDtd, dtdRecoveredUN* and *dtdCandidateATC.*

*computedCVC* = LSD(3,Byte2Dec(LSB(2, DES3(SK)[buffer with IV, UN and ATC]))), where

- DES3 is a 2-key Triple DES Encryption (EDE) using ECB mode
- LSB (n, X) is the least significant (rightmost) n bytes of byte string X
- Byte2Dec(X) converts a string of bytes to an integer expressed in decimal. For example Byte2Dec('C07E') = 49278
- LSD (n, D) is the least significant (rightmost) n digits of an integer expressed in decimal

This validation process will succeed or fail, and this marks a decision point 409. If there is a success 410, then the current candidates (for UN and ATC) can be taken to be correct. The value for *dtdLastKnownATC* is updated using *dtdCandidateATC,* the ATC for that Session Key is marked as used, and the result of validation is reported (as a success). If there is a failure, there is a retry process according to the following criteria:

- Attempt to validate Dynamic CVC using the next recovered UN value *(dtdRecoveredUN\*\*\*)* according to the ranking based on delta values *(dtdValDelta\*\*\*)*;
- If there are no more *dtdRecoveredUN\*\*\** available, then try again to validate Dynamic CVC using another ATC candidate *(dtdCandidateATC)* - this can be attempted for all the recovered UN candidates;
- If there are no more *dtdCandidateATC* available, then try again to validate Dynamic CVC after adjusting the number of months *(dtdGenNbrMonths)* - this will require a recalculation of the ATC candidates and the recovered UN candidates, and the process can be carried out for all these new candidates according to the previous two steps. If this fails, a further month adjustment can be used. Month adjustments address "end of month" issues when generation occurs in one month and validation in another, as discussed earlier.
- If the validation (#23) is still a failure when all the month adjustment options have been addressed, then it is necessary report the result of validation (as a failure)

After delivery of the result 411, the computed and generated values that have not been actively stored in a step indicated above can be wiped 412.

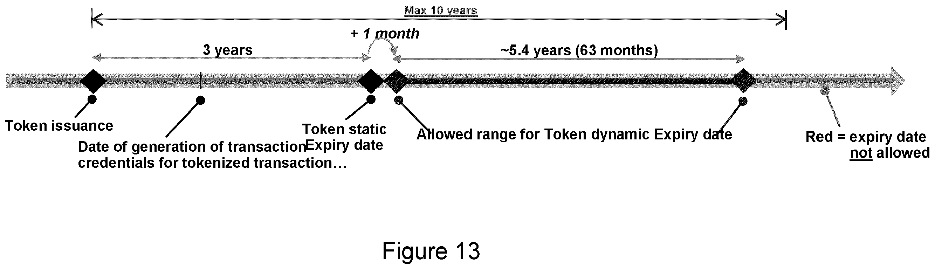

This existing approach as described in Figures 8 and 12 is not entirely satisfactory for two reasons. The first reason is that a transaction may be initiated by different routes, and that these different routes may involve different processing, with some routes requiring static data and others using dynamic data. It has been realised that if the dynamic expiry date can be the same as the actual (static) expiry date, then there is potential for confusion between the two transaction types. Figure 13 shows an approach developed to address this issue, which involves using an offset to make an explicit separation between the static expiry date for the token and any dynamic expiry date. In the approach shown in Figure 13, a date range for dynamic expiry date is established which starts the month after the static expiry date for the token - this still leaves sufficient space for effective use of the date field to carry additional information. The legal range of values consists of a 64-month period - the static expiry date month followed by a 63-month range of possible dynamic expiry date values.

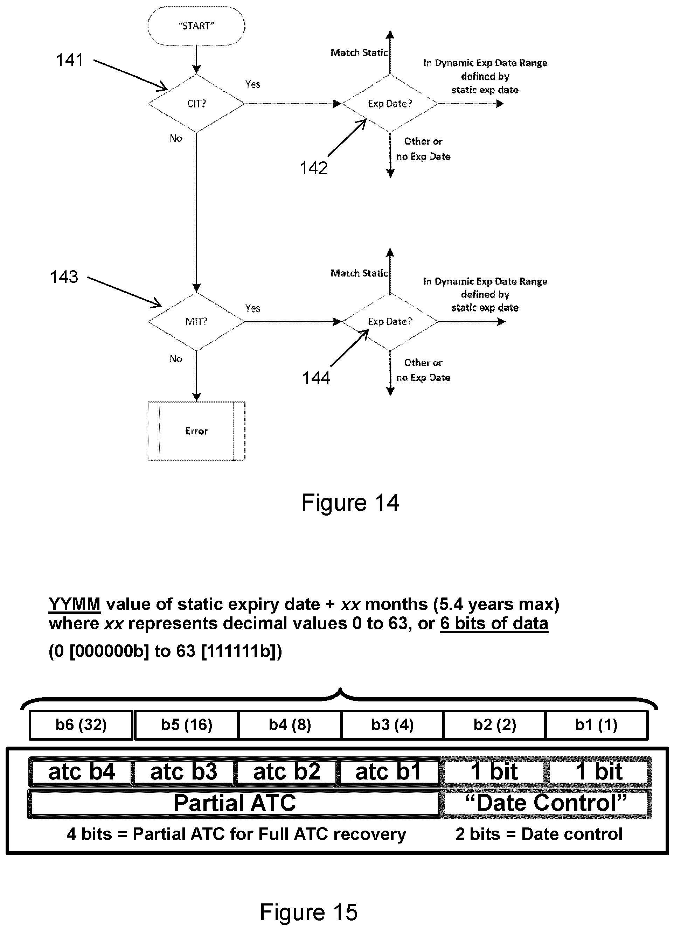

This allows for a basic processing path for transactions as shown in Figure 14. First it is determined 141 whether a transaction is consumer-initiated (CIT) or not. Determination of whether a transaction is consumer- or merchant-initiated can be determined from various EMV-defined information, such as Security Level Indicator (SLI) or the presence of CVC2 data in the authorization message (as merchant or PSP are not allowed to store that value). If it is a CIT, then the expiry date 142 is evaluated to determine whether it is the static expiry date, a dynamic expiry date, or another number (in which case the transaction is probably invalid). Each of these options has its own processing path for authorisation of the transaction - these will not generally be described in detail here except where details of a particular processing path relate to the discussion of dynamic token data provided here. If the transaction is not a CIT, it is then determined 143 whether it is a merchant-initiated transaction (MIT) - if it is neither, then there will be an error condition, but for an MIT there will again be separate transaction processing options 144 for static expiry date or dynamic expiry date, though these may differ from those used for a CIT.

The second reason is that the need for iteration in the validation process may be problematic or lead to decrease the security level of the solution when retries are used as part of guessing process to recover data not carried as part of the transaction flow, and it would be desirable for more effective and secure operation to avoid it altogether. Various situations that would otherwise require iteration can be addressed by including additional data to indicate time-related information instead in some of the repurposed fields (though this does of course affect what other information can be carried, as discussed further below. Figure 15 shows an exemplary case, in which 2 bits of data have been repurposed to provide a date control. Here, these 2 bits can be cycled between four values such that we can validate the consistency between the validation date and the recovered generation date information. The control date value can be computed using a modulus 4 over the number of days between a baseline value and the day of the generation (or validation). It can be used to determine if the generation of the dynamic CVC was performed the same day as the validation of the supplied value or the previous day. The previous day can lead to adjust the reference month, when for example the generation was performed on the last day of a month and the validation is done the first day of the following month. This removes the need for month adjustment through a retry mechanism, as this will ensure that the correct combination of year and month (YYMM) is identified using a deterministic process without retries prior to any use of the recovered data for validation of the dynamic CVC.

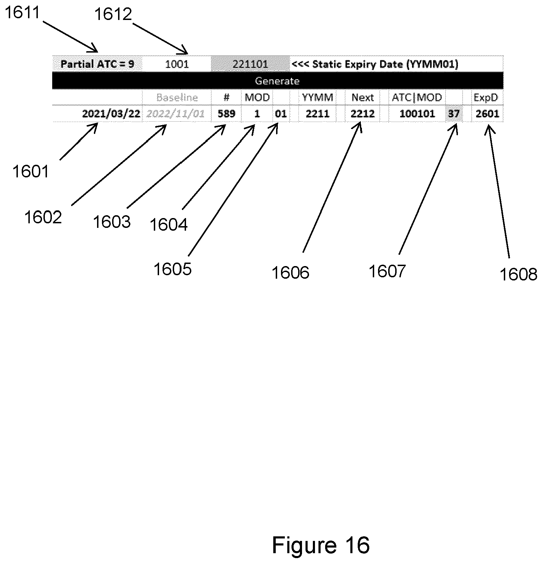

The process of generating and using the date control field is shown in more detail in Figure 16. First of all a generation time is determined 1601, shown here in YYMMDD format as 21/03/22 in the indicated example. A baseline time is determined 1602 by the static expiry date for the token - in this case 22/11/01. The number of days between the baseline time and the generation time is established 1603, and MOD4 of this number of days is determined as a decimal value 1604 and converted into two bits of binary 1605 - these is the two-bit Date Control value. Using the static expiry date of 2211, a "next month" value of 2212 (representing December in year 22) is established 1606. Separately the ATC value (4 bits) is concatenated with the Date Control value (2 bits) to form a number of months in decimal 1607, which is in this exemplary case has the value 37 (using a decimal ATC value (9) 1611 encoded into binary (1001) 1612). The dynamic expiry date is determined 1608 as the "next month" value (2212) advanced by the number of months determined in step 1607 (37), giving 1608 a dynamic expiry date value of 2601 - which is in the acceptable range of dynamic expiry date values, and which will not be rejected as being an "impossible" expiry date.

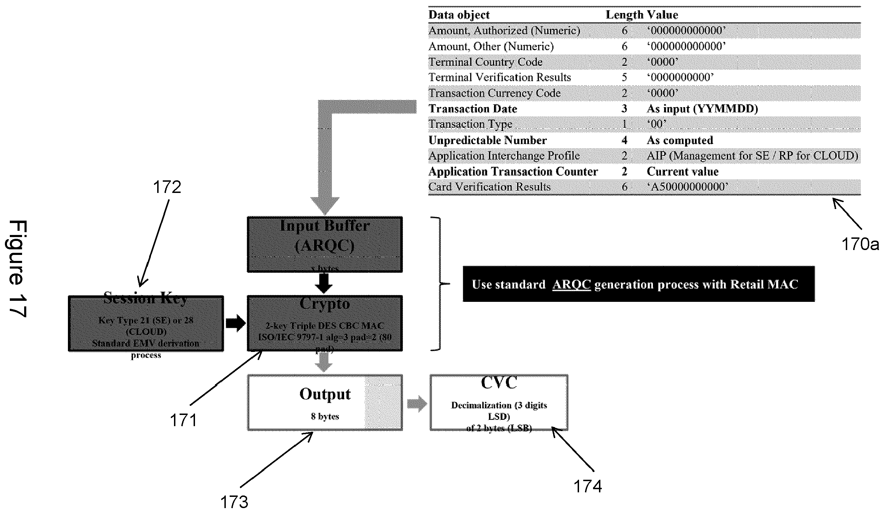

The use of the two approaches indicated above results in some modification to the generation flow shown in Figure 8 and the validation flow shown in Figure 12, with a further significant change to the Unpredictable Number generation process shown in Figure 10 to simplify generation by making it date- rather than time-based. In respect of the dynamic CVC generation process shown in Figure 11, the same approach can be taken as before, though using a differently generated UN and a full ATC value, though an alternative approach can be used, as shown in Figure 17.

The alternative approach to CVC generation is to use a process that uses essentially the same data as for generating the ARQC application cryptogram in conventional EMV. The fields used and appropriate lengths and values are as shown in input buffer contents 170a in Figure 17. A suitable cryptographic process 171 may be used with a session key 172 derived according to normal EMV principles to achieve an 8-byte output 173 as before. As before, the CVC value 174 may be the three least significant digits of the decimalised version of this output.

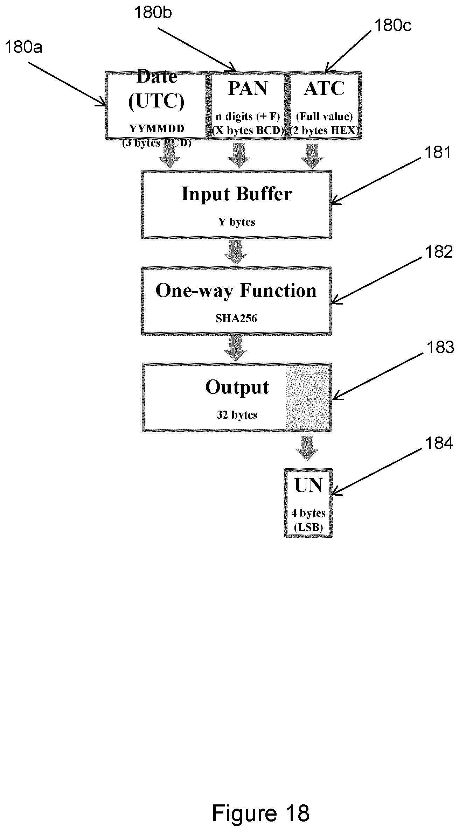

The new approach to unpredictable number (UN) generation is shown in Figure 18. While the inputs look superficially very similar to those in the Figure 10 case, the differences are significant. First of all, the generation date (using 3 bytes of binary coded decimal) is used as the time-based input 180a, the PAN is provided 180b as before, but now the full ATC value is used 180c. This provides a Y byte input buffer 181 as before, which is processed through a one-way function 182 (such as SHA256) as before, to form a 32-byte output 183. The four least significant bytes are used 184 for the unpredictable number.

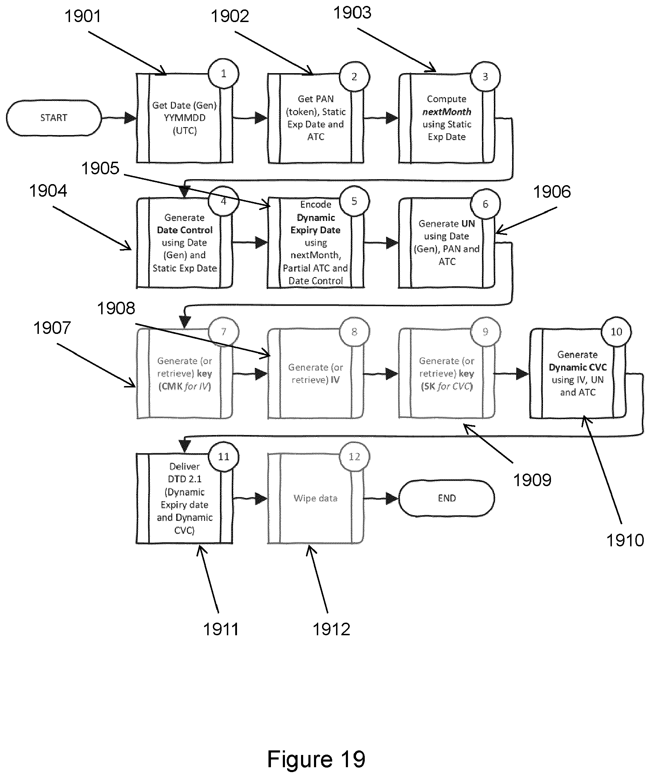

The generation process for the new token type described above is set out below with reference to Figure 19. The result of the generation process is the following Dynamic Token Data:

- DTD Dynamic Expiry Date: dtdDynamicExpDate
- DTD Dynamic CVC: dtdDynamicCVC

As in the Figure 8 case, the generator has access to information from the card profile: here, the relevant data is the PAN (or Token), referred to here as *Token;* and the initial vector (IV) used for DTD transactions *ivCvc3TrackDtd* - the static Token Expiry Date *tokenExpDate* is also used here. The initial vector can be generated as for the Figure 8 case. The generator will also be able to provide unique transaction credentials for the DTD transaction: the ATC *dtdATC;* and a session key, here identified as SK_CL_UMD. As would normally be the case in such operations, a Hardware Security Module (HSM) would be used for cryptographic operations such as key management, IV generation, and here, generation of the CVC Value - these are provided as follows:

    o Card Master Key (CMK) and Session Key (SK) generation from Issuer Master Key (IMK)
    o IV generation from track data and Card Master Key (CMK)
    o CVC Generation using Session Key (SK), IV (ivCvc3Track2Dtd), UN (dtdGenUN) and ATC (dtdATC)

Figure 19 indicates the different steps taken by the generator. First of all, the reference date (UTC) is obtained 1901 for generation of transaction credentials - this is set at *dtdGenDate* using YYMMDD format. The following token and transaction counter (ATC) information is then obtained 1902:

- PAN (Token): *token*
- Static Expiry Date (Token): *tokenExpDate*
- ATC: *dtdATC*
- IV: *ivCvc3Track2Dtd* (this may be computed or taken from the card profile

The static expiry date for the token is used to calculate 1902 the next month value (YYMM) of *dtdNextMonth* where *dtdNextMonth* = addMonths*(tokenExpDate,1)*. The Date Control is then generated 1904 - *dtdGenDateControl* is generated using *dtdGenDate* and *tokenExpDate* using the approach indicated above. The 4-bit value of the partial ATC *dtaPartialATC* is computed 1905 from *dtdATC* and the Dynamic Expiry Date *(dtdDynamicExpDate)* is encoded using *dtdNextMonth, dtdPartialATC* and *dtdGenDateControl* again using the principles set out above. Tokens with an odd length are padded *(paddedToken)* with a value F and the Unpredictable Number is generated 1906 using *dtdGenDate, paddedToken* and *dtdATC,* with the process for UN generation being as set out above.

The following steps will not always be required, but they can be carried out in the HSM if necessary. If IV is available in the card profile, it can simply be used, but if not, then the HSM generates or retrieves 1907 the Card Master Key CMK_CL_UMD and generates 1908 the IV value *ivCvc3Track2Dtd.* If SK_CL_UMD is not available in the set of keys, the session key SK_CL_UMD corresponding to the ATC value *dtdATC* can simply be generated 1909 in the HMD.

The HSM then needs to use the session key SK_CL_UMD to generate 1910 the CVC value *dtdDynamicCVC* using *ivCvc3Track2Dtd, dtdGenUN* and *dtdATC.* At this point, the whole token payload has been generated - including *token, dtdDynamicExpDate* and *dtdDynamicCVC* - and it can be delivered 1911 with transaction credentials and any transient data used for the transaction subsequently wiped 1912.

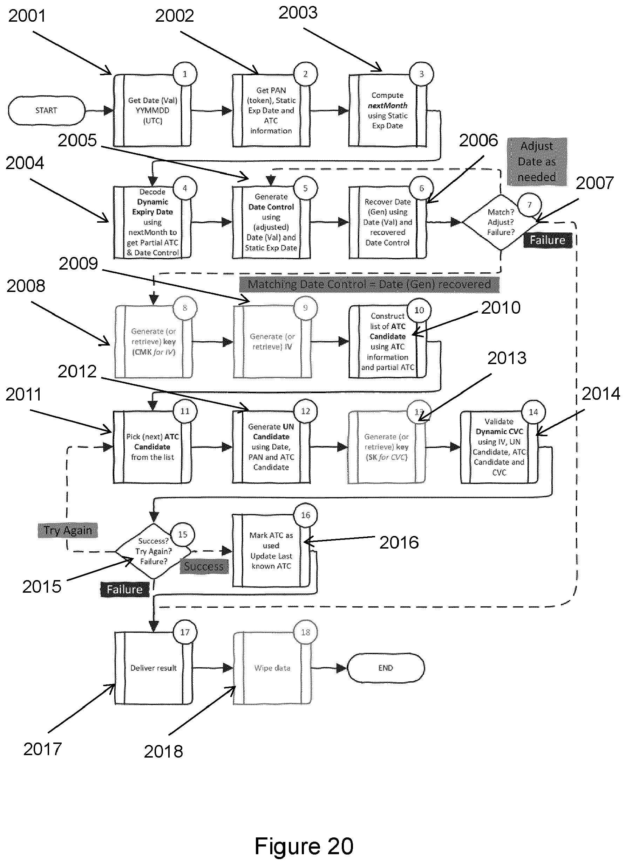

There is consequently relatively little different between the generation process shown in Figure 8 for the earlier type of token and the generation process shown in Figure 19 for this newer type of token. However, the validation process for this new token type avoids the problems arising with the earlier token type - this validation process is set out below with reference to Figure 20. The object of validation is to validate the dynamic CVC *(dtdDynamicCVC)* using the information provided in the online Authorization Request, which will include the PAN (Token) *token,* the DTD Dynamic Expiry Date *dtdDynamicExpDate* and the DTD Dynamic CVC *dtdDynamicCVC.*

As before, the validator will have access to various information, and also to a HSM capable of performing necessary cryptographic computation. The validator has access to the following information associated with the PAN(Token), most of which is similar to the Figure 12 case, but note here the use of the static Token Expiry Date:

    o PAN (Token): *token*
    o Token Exp Date: *tokenExpDate*
    o Highest used ATC: *dtdHighestUsedATC*
    o Information to construct the Track data *(track2Dtd)* that will be used to generate the IV value *(ivCvc3TrackDtd)* using the following values:

        □ *trackDtdExpiryDate:* "xxxx" value in "trackDtd"
        □ *trackDtdServiceCode:* "yyy" value in "trackDtd"
        □ *trackDtdPanSequenceNumber.* "z" value in "trackDtd"

where the *(trackDtd)* is a 19-byte value: **"<PAN>Dxxxxyyyz000000000000F"** with **<PAN>** set to *Token,* D defined as a delimiter and "000000000000F" defined as a filler.

The HSM provides the cryptographic functionality necessary for key management, IV generation and validation of the CVC value, specifically:

    o Card Master Key (CMK) and Session Key (SK) generation from Issuer Master Key (IMK)
    o IV generation from track data and Card Master Key (CMK)
    o CVC Validation using supplied CVC *(dtdDynamicCVC),* Session Key (SK), IV *(ivCvc3Track2Dtd),* Candidate UN *(dtdCandidateUN)* and Candidate ATC *(dtdCandidateA TC)*

As will be discussed below, the need for retry has been largely eliminated in this approach and is confined to certain situations where a particular ATC management choice has been made - no retry is needed for UN value reconstruction as this is now a fully deterministic process using the recovered generation date *(dtdGenDate),* the padded PAN *(paddedToken)* and the candidate ATC *(dtdCandidateATC).*

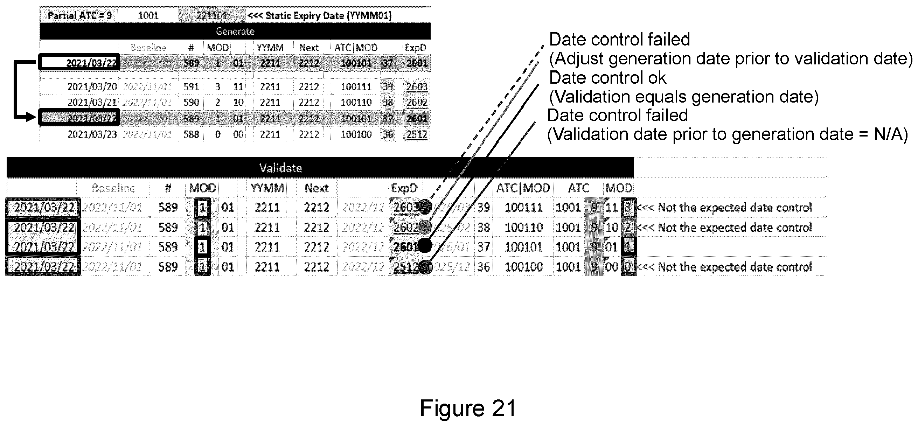

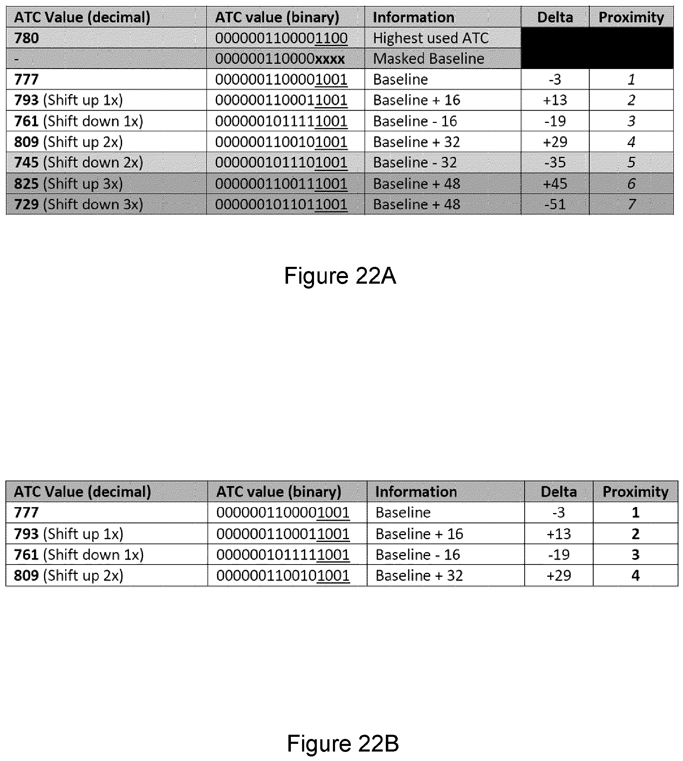

The steps performed by the validator in validation are illustrated in Figure 20, with reference to Figure 21 (which illustrates an exemplary use of the Date Control data to determine date of generation) and to Figures 22A and 22B (which illustrate retrieval of ATC data from the Dynamic Expiry Date).

First of all the reference date for transaction credentials validation is established 2001 - this is *dtdValDate* in the YYMMDD format. The relevant information for the token that is obtainable for the token - PAN (Token) *token* and Static Expiry Date (Token) *tokenExpDate* - and for transactions relevant to the card - Highest used ATC *dtdHighestUsedATC* - recovered 2002. The token static expiry date is used to calculate 2003 the next month value (YYMM) *dtdNextMonth* as indicated for the generation process. At this point, the Dynamic Expiry Date *(dtdDynamicExpDate)* can simply be decoded 2004 using *dtdNextMonth* to retrieve a number of months corresponding to a 6-bit value containing both the partial ATC *(dtdPartialATC)* and the Date Control *(dtdGenDateControl)*. This provides a retrieved Date Control value from the generation process. However, a Date Control value can be computed 2005 directly using *dtdValDate* and *tokenExpDate.*

The use of the Date Control in recovering 2006 the date of generation will now be described with reference to Figure 21. As can be seen in Figure 21, there is a match of retrieved and computed Date Control values - this indicates that the validation and generation have taken place on the same day, and the process can be continued 2007 using the recovered generation date *dtdGenDate.* If there is no match of date control, then we can revert to generation 2005 of the Date Control, working on the assumption that generation was done the day before - if there is then a Date Control match, the process can again continue with the appropriate *dtdGenDate* value. However, if there is not a match over a period in which the business rule for validation can be met (for example, the requirement may be that validation must take place on the same day as generation or the following day) then the validation process will have failed, and this is the result that must be delivered 2017.

Now that a *dtdGenDate* value has been adopted, it can be determined whether there is a valid ATC candidate. First of all, the Card Master Key can (if needed) be generated 2008 and the Track 2 data used to generate the IV value *ivCvc3Track2Dtd* generated 2009 in the same manner as described for the generation process. The 4-bit partial ATC value *(dtdPartialATC)* can now be retrieved 2010 from the decoded *dtdDynamicExpDate* and the following procedure followed:

- The value of the partial ATC represents the 4 rightmost bits of an actual ATC *(dtdATC* used at the time of generation), and the following process involves determining possible Candidate ATC values and ranking them in order of likelihood.

  ◦ A maximum of 7 values is used.
  ◦ The highest used ATC value *(dtdHighestUsedATC)* is used to compute the baseline.
  ◦ The partial ATC value is applied to the masked baseline.
  ◦ Shifts up (up to 3 times using +16, +32 and +48) and shifts down (up to 3 times using -16, -32 and -48) on the baseline value are used to identify candidate values

- Any candidate that is not in a permitted range for an ATC value is removed.
- Any value marked as USED is removed (this should be sufficient to prevent replay attacks).
- Using proximity (here, distance between the candidate ATC value and the baseline) the list of Candidate ATC values is sorted - the best scoring 6 values are kept (with shift up favoured over shift down in the event of a tie).

This approach allows a substantial number of Candidate ATC values to be assessed if necessary. Figures 22A and 22B illustrate an example of this process. Here, the value of the highest used ATC happens to be 780 (decimal). In binary, this is 0000001100001100 with 1100 as the rightmost 4 bits, and the masked baseline value being 000000110000xxxx. In this example, the 4-bit value for partial ATC is 1001.

Figure 22A represents the ATC values that result when the shift process is carried out up to three times both up and down. When using 4 bits and a masked baseline, a difference of 16 results with each shift. A delta value is determined for each candidate ATC - this the difference between the candidate ATC *(dtdCandidateATC)* and the highest used ATC *(dtdHighestUsedATC).*

The proximity of each candidate now needs to be determined - but before this is done, additional information concerning legitimate ATC values needs to be used. In this case, there is a pool of ATC values beginning at 740 and ending at 815, and two of the values on the Figure 22A list are marked as used (obviously the highest used ATC of 780, but also the double-shifted value 745). This means that three values (the used value of 745, but also the out-of-range values 729 and 825) are eliminated. The remaining values are ordered by proximity and shown in Figure 22B. All these are possible ATC values, and they can be tested in order of likelihood.

The next stage is a loop to test ATC candidates, which begins with the most likely remaining ATC candidate being selected 2011. Any odd length token is padded by 'F' *(paddedToken),* and the Unpredictable Number for that ATC value is generated using *dtdGenDate, paddedToken* and *dtdCandidateATC.* This is a fully deterministic process. The HSM may now generate 2013 the session key SK_CL_UMD for that candidate ATC value *(dtdCandidateATC),* and this can be used to validate the CVC value *(dtdDynamicCVC)* using *ivCvc3Track2Dtd, dtdCandidateUN* and *dtdCandidateATC.* Typically, this will involve generating the CVC value - as all the information is present to do so at this point, assuming that the correct candidate has been chosen - and comparing it with the supplied CVC value.

If there is a match at this point, the validation process has succeeded, and the necessary parameters are set 2016:

- If this is the new Highest Used ATC, update *dtdHighestUsedATC* using *dtdCandidateATC*
- Mark the relevant ATC *(dtdCandidateATC)* as USED
- Set the result of the validation as success

The result can then be delivered 2017. If there is no match, that candidate ATC is marked as failed and the next most proximate candidate ATC is selected 2011 and the resulting steps followed. If all candidate ATCs on the list have failed, then a security counter may be incremented and the result of the validation set to failure, with the result of validation being delivered 2017. After delivery of the result, any data no longer required (such as lists of *dtdCandidateATC* and *dtdCandidateUN)* is wiped 2018. Such a security counter may be used to detect and prevent brute force attacks on the system.

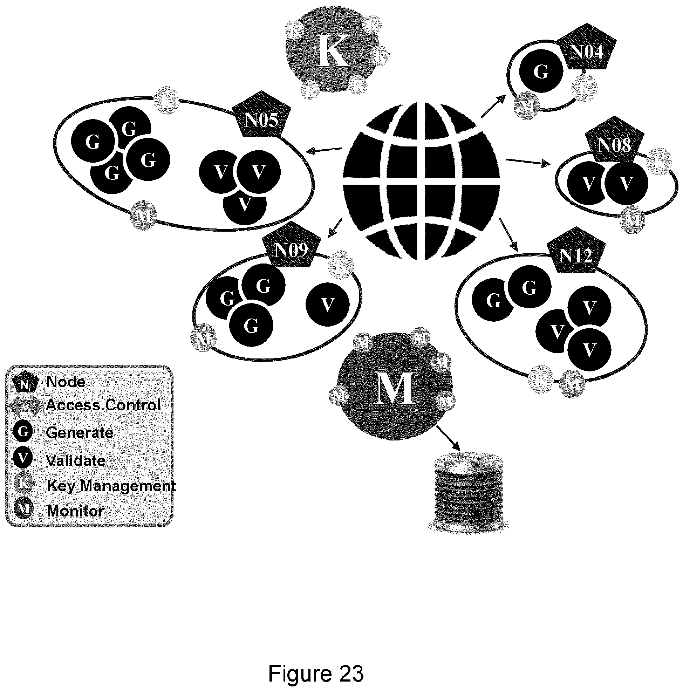

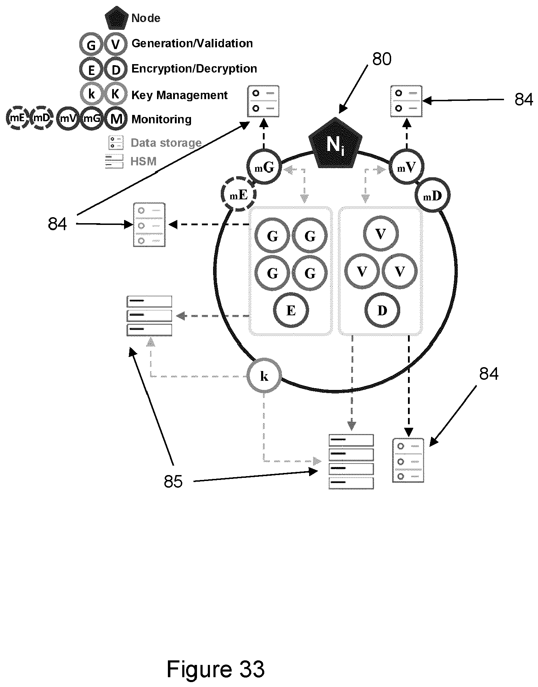

An approach to enabling aspects of a system for the performance of a digitized transaction as shown in Figure 4 - and in particular the management of credentials - to be decentralised is described in the applicant's earlier WO2020/247093, the contents of which are incorporated by reference to the extent permitted by applicable law. This is done by replacing a central node with a decentralised set of nodes each capable of credential management, as is shown in Figures 23 to 25. Tokens according the present disclosure may also be used in this context, although in one use case a further embodiment of the present disclosure may also be employed. This further embodiment will be described below after discussion of the decentralized system for management of digitized transactions to which it is applicable. This involves discussion of the basic system (with reference to Figures 23 to 32) and the modified system for which the further embodiment of a token is required (with reference to Figures 33 to 42).

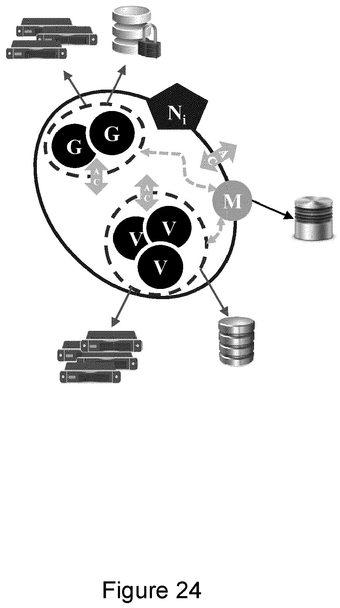

Figure 23 shows a decentralised system of computing nodes Nx, each capable of both generating G and validating V credentials. These credentials can be valid across the whole system (unless restricted to some nodes as result of on-soil regulation or the like), and in this case are associated with transactions for a set of users (clients) whose transactions are routed to that node, typically through geographic proximity. Nodes provide credential generation G and credential validation V as services to clients, and they need to be able to generate the credentials securely and validate them securely while they are valid at least. In the architecture shown, credentials are not stored - they are generated on request and validated on the fly. As Figures 23 and 24 show, in addition to credential generation and validation, key management K and monitoring M can be considered as services both locally at a node and across the system, and access control AC will typically be required to allow access to a service. These aspects will all be described in more detail below.

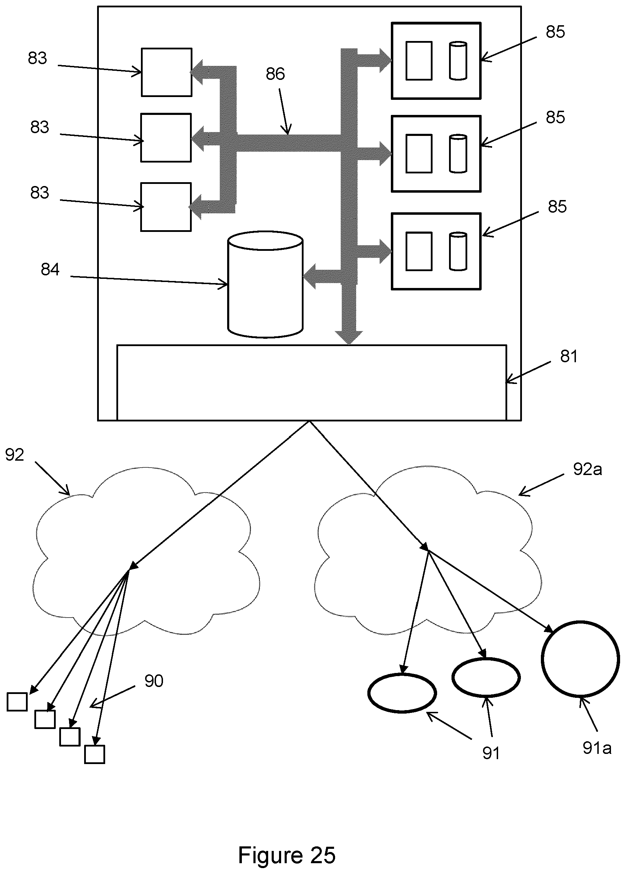

Elements of a suitable computing node are shown in Figure 25. The node 80 comprises at least one networking connection 81 to allow communication to clients 90 and other nodes 91 as well as (in this example) a central node 91a. Communication is shown here as being through separate networks to each set of other parties - through a first network cloud 92 for connection to clients, and a second network cloud 92a for connection to other nodes within the distributed system. This reflects that these networks may be physically different, or that they may have different security requirements and protocols.

The node 80 contains a plurality of conventional servers 83 (which will contain their own processors and memories - not shown - along with other components as would normally be found in a server) and a memory 84 containing a central database. Also comprised within the node 80 are a plurality of hardware security modules 85 (HSMs), adapted to hold cryptographic material in the form of keys needed to perform cryptographic functions and to perform cryptographic functions securely. Here elements within the node 80 are shown communicating by means of a bus 86. While the node 80 in this case is represented as a single data centre, this is not required - the "bus" may be, for example, comprise a dedicated network connection between a group of related data centres that allows them to provide a real-time response such that they will appear to other entities communicating with the node to be part of an integrated whole.

Existing procedures for credential management in payment systems are centralised - any request to create or validate credentials results in a query to a centralised system. For a payment system implementing EMV standards, credentials are generated using keys derived according to a hierarchical process. Issuer Master Keys (IMK) are associated with a specific range of tokens, and keys for use for credentials are derived hierarchically (Card Master Keys - CMK - from IMK, and then Session Keys - SK - from CMK). This approach is used for devices, such as physical cards, but is also used for digital transactions. The number of digital transactions is increasing extremely rapidly, as opposed to device-based interactions where the growth is more consistent with resources.

In the digital ecosystem, while there is very rapidly increasing demand, there is also generally a more secure environment, as the interaction is typically between merchant systems (or payment service providers) and the transaction system over secure pathways between well-identified participants. There are thus interactions that may require multiple cryptographic operations for security in a device context that can be streamlined when delivering services in a server context when exposing API to access the services while keeping all the assets secure in a constrained environment including key management and cryptographic operations.

While it may appear desirable to scale a transaction system for performing digital EMV transactions by using a set of distributed servers to generate and validate credentials, it is found that this approach does not scale. The overall level of key generation would not be changed, but the amount of messaging within the system would be very greatly increased, as an extremely large number of tokens would need to be managed and replicated. Processing would be demanding and also extremely expensive, as existing EMV key generation approaches require customised rather than off-the-shelf Hardware Security Modules (HSMs), and data storage and particularly network latency would become impossible to manage problems.

This distributed approach is supported by replacing the binding of a token to a specific hierarchically derived key, allowing instead the first available key from a stack of keys to be allocated to a tokenized transaction. This approach, using flexible and dynamic key management, allows for a scalable solution. Monitoring can be carried out in such a way as to ensure that the distributed architecture is secure without requiring the transmission or replication of large quantities of sensitive information. This approach can also be carried out in a standard HSM using fully FIPS compliant processes - for example, DES and 3DES need not be used. This approach is described in more detail below.

At present, the device security model is also used by the present applicant for fully digital transactions. This security model involves Issuer Master Keys (IMKs) being stored in the transaction system HSMs and used to derive Card Master Keys (CMKs) from the relevant IMK and a card PAN (Primary Account Number). These CMKs are then stored in a device (typically a Secure Element or substitute technology). When using software-based solutions to generate transaction credentials using a mobile device, a Session Key (SK) is generated using the relevant CMK and an ATC (Application Transaction Counter) for the card/device - this is currently generated by the Credentials Management System (CMS) as shown in Figure 4. At present, all tokens, even for fully digital transactions, are bound to this IMK/CMK/SK derivation. This also applies for transaction credentials generated by server through API exposed by the transaction system for remote payment transactions.

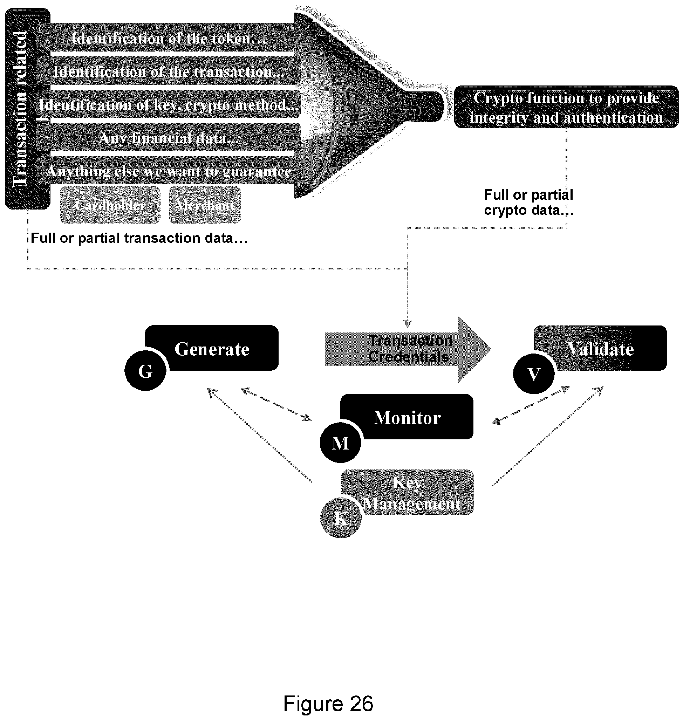

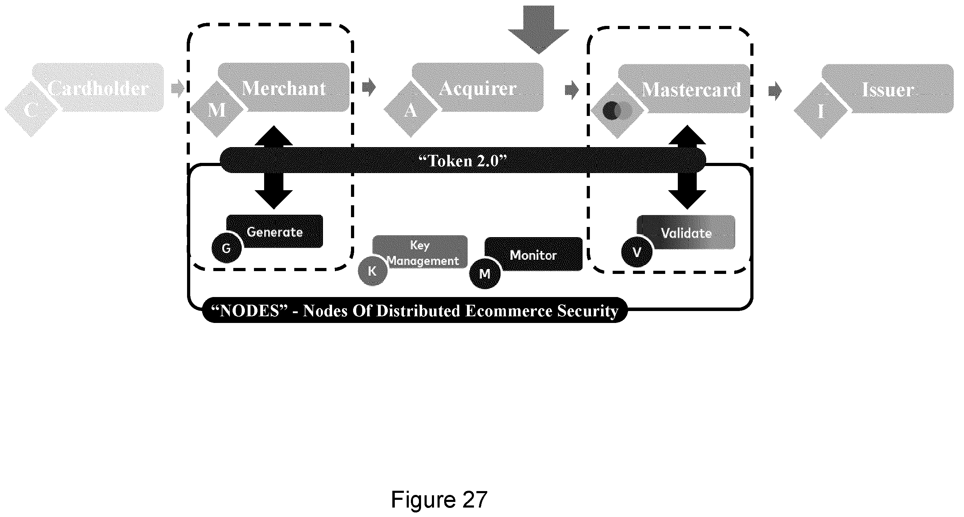

This approach requires a very heavy management load for keys, which is not appropriate for fully digital transactions, as is discussed below with reference to Figures 26 and 27. Generation of SKs, and hence Application Cryptograms (AC - a standard mechanism in EMV transactions) requires multiple cryptographic operations, not all of which can be carried out by a conventional off the shelf HSM, so bespoke HSMs are required. Massive distribution of keys across the system is required so that performance of a transaction can be supported wherever it occurs, and ATC management is complex. It would be desirable to use standard HSMs, avoid massive key replication while having keys directly available for use, and to be able to provide a solution that limits the number of HSMs overall (as these typically support only a few thousand keys).

Much of this security is to provide assurance by appropriate prevention mechanisms even if there is the possibility of compromise at a system endpoint (for example, at the cardholder device). Aside from this, security has a limited role, as shown in Figure 26. The main purpose of the cryptographic function is to provide a guarantee - this covers both integrity of the data and authentication. The transaction related data protected by a cryptographic data includes identification of a transaction and the associated token, along with an indication of any cryptographic processes used and any relevant financial data (along with any other aspect of the transaction that needs to be guaranteed). This is represented by a transaction credential - this needs to be generated G and subsequently validated V, with these processes being monitored M to ensure overall system integrity and supported by a key management system K of some kind. The present disclosure relates to an approach to monitoring which is effective to address the consequences of erroneous or malicious action by appropriate detection, messaging and reaction - as will be described, this largely takes place separately from the actual performance of a transaction.

In the case of a fully digital transaction, these processes take place in a constrained environment where endpoint security is not an issue in the same way as with devices. As can be seen from Figure 27, in this domain the token does not reach either of the endpoints of the conventional transaction management system - the cardholder or the issuer. Instead, it operates across a merchant system or a payment service provider (PSP) and transaction scheme provider.

This approach allows for decentralisation of the credential system from a complex central server into a number of nodes providing services. These nodes will typically be geographically distributed but may extend over a number of data centres (for example, by use of a cloud infrastructure to achieve data sharing within a node). These nodes provide services - in relation to credentials, a generation service G and a validation service V - with defined rules for access control to the services. The merchant or PSP communicates with the generation service G to obtain credentials, which are then used in a standard authorisation process carried out over the payment network of the payment system, with the validating service V being called upon where necessary to validate the credential. These services have access to the computing infrastructure (HSMs, databases) of a node. Monitoring M and key management K services are also provided - these may be centrally organised or comprise a mix of central and local functionality.

Access control to services can be provided in an essentially conventional manner. A general set of controls can be defined for a node, with the possibility of local modification - for example, to meet local regulatory or other specific security requirements. This approach makes it easy to implement localised policies, for example, by constraining all traffic for a particular country to a particular set of nodes, or by taking other region- or market-specific actions. Access control can be performed at more than one level (for example, for individual services, but also for a node), and there may be specific rules or checks for specific service types. Access control is potentially very granular and may provide specific solutions in a versatile way - for example, it could be used to allow a given merchant to perform a maximum number of transaction credential generation operations during a defined time for a given token.

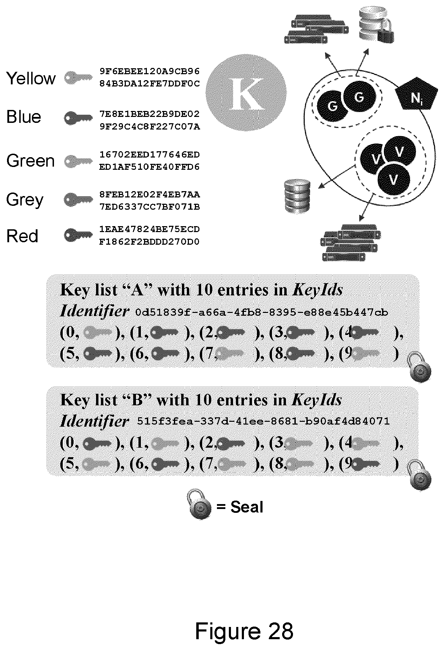

The key management mechanism shown in Figure 28 illustrates how a limited number of keys can be allocated to a node while providing a deterministic process in order to pick a key to generate credentials. The same process can be used by a validation entity to determine the key that was used by the generator so that it can validate any cryptographic material that is part of the credentials submitted for validation.

For each node, the generation G and validation V services have access to a pool of HSMs. The HSMs contain keys that are each uniquely identified by a set of key identifiers (KeyId). KeyId may be a label, a value, an explicitly unique value such as a UUID, or anything else with appropriate properties. These KeyId values are stored in uniquely identified (Identifier) key lists - these key lists provide a list of relationships between an identifier (Id) and a stored key (KeyId). The identifiers (Id) are what will be determined by the deterministic process in order to establish what key is to be used, as will be described further below.

The integrity of each key list is guaranteed using a seal (Seal) - if the key lists are provisioned from a central location, this may be applied by a trusted party associated with that central location. Several other distribution models can be supported using for example a trusted party being a local functionality instead of a central location. A node will typically have a number of key lists available, but with only one active for generating credentials (G) at a given time - it will however generally be necessary for the validation service (V) to be able to access any key list that may be associated with a credential that is still valid. Key rotation in this approach is extremely straightforward - it may simply involve replacement of the active key list with another key list. It is however very straightforward to tell which KeyId is needed to validate a credential - it will be determined fully by the node identifier and the reference of the key list. That information is part of the credential and is used as input to the deterministic process to pick a key from a list of keys.

Figure 28 illustrates an exemplary arrangement for Node Ni, which has two generation services G able to generate credentials associated with transactions. At any given point in time, these services G will be required to use a given key list - say Key List A in the first instance. This uses the yellow and blue keys, so these keys must be loaded in the HSMs used by the generation services G. After the expiry of a period of time, the key rotation process may for example mandate the use of Key List B - this uses yellow and blue keys, but also the green key, so the green key must be loaded in the relevant HSMs if not already present. The specific key to be used is selected from the key list by a deterministic process- this will typically give a different result after key rotation, but this is not inevitably the case (for example, Id=3 or Id=6 would give the blue key before or after rotation). While the generation services G do not need Key List A after key rotation, the validation services V still do - they require access to any key list that relates to a potentially valid credential. The validation services V must be able to establish exactly which key was used to generate a credential by the generation services G in order to validate a credential.

The transaction related data to be protected cryptographically includes identification of the token associated with the transaction, but also identification of the transaction itself. For this, some kind of transaction identifier is required. At each node, the credential generation and validation services have access to a local database which can be used to manage such data. To ensure that transactions are managed effectively across the system, any generation of transaction credentials for a given token should be associated with a unique transaction identifier for each transaction. This may be a UUID or any appropriate identifier structure (such as a concatenation of an n bit node identifier, an e bit epoch time, and a c bit local counter).

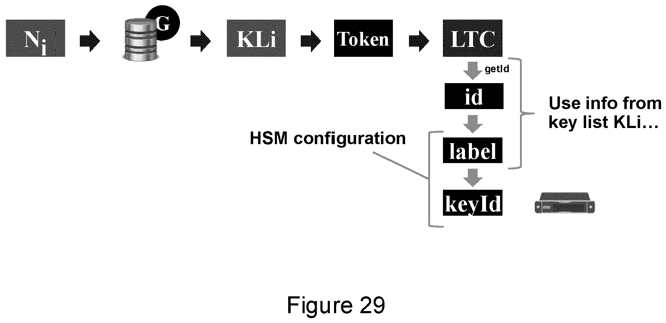

The size of data to be carried in transaction credentials could however be reduced to a few digits by use of a local transaction counter. This could simply be stored in the local database of a node and the local (rather than a global) value incremented when a local generation service G generates new transaction credentials for a token, a process shown in general terms in Figure 29.

An exemplary process for identifying a key to use for a transaction will now be described with reference to Figure 28. As indicated, at any given time a generation service G has access to a set of keys in local HSMs and uses keys in accordance with its currently active key list. This key list is itself uniquely identified (by Identifier) and contains a list of entries which correspond to relationships between an identifier (Id) and a stored key, represented by KeyId. In the case of Key List A, there are ten entries, and each Id is a single integer.

There will be a deterministic process associated with a key list to determine which key will be associated with a given transaction. It need not be the same deterministic process for every key list, but it needs to be used consistently for that key list so that both generation and validation services will achieve the same result. To provide this association, the deterministic process should operate on information identifying the transaction, such as some kind of transaction identifier - in this case, the local transaction counter (LTC) is a particularly effective choice as this is conveniently available and easy to process. Note also that in the context of the token described in embodiments of the disclosure, it is LTC - rather than an ATC, as for a payment application - that is used as the "counter" value carried in the transaction data.

There are many choices available for a function, but the simplest choice is a MOD operation - for example here, Id = LTC MOD 10 would be appropriate to provide a deterministic result which could point to any of the available values of Id. Any validation service V with access to the transaction counter value in transaction data (or any counter derived from that value) can then determine the logical key identifier that was used by the generation service G that generated the credential and access the correct stored key without any trial-and-error mechanism. Associating the deterministic process function (referred to below as keyList.GetIdFunction, or GetId) to the attributes of a key list in this way allows a scalable solution that can accept any number of logical key identifiers for a given key list.

The HSM cryptographic function should be appropriate to ensure data integrity and authentication through credential generation and validation. The cryptographic function operates on the chosen transaction data, using the key, and provides an output which does not expose the key. Various alternative cryptographic functions could be used - HMAC is a particularly effective choice with several options regarding the hashing function, but CMAC, CBC MAC are among possible alternatives not even talking about solutions using asymmetric cryptography. The cryptographic function used should be specified in the key list (as keyList.CryptoFunction) and is also driven by the capabilities of the HSMs used for generation and validation. On-soil regulations, cryptographic material export or other security considerations may lead to the choice of specific cryptographic functions.

Within the transaction data, there should be information representative of the application cryptogram generated during the transaction process. This may be a reduced form of the cryptogram - for example, in legacy EMV transactions this may be provided as the CVC2 field. This is significant as a validation service V must be able to access all the data used by a generation service G to generate a cryptogram - this will include the following:

dynamic information carried as part of the transaction flow;
shared information from one of the following:

replicated processes (such as management of the key lists);
system parameters for particular use cases.

Different approaches can be used for difference transaction information formats - legacy transaction, UCAF and DPD field transactions. Legacy transaction use cases provide a solution when the Merchant and/or the PSP are only able to manage PAN, Expiry Date and CVC2 as part of the transaction flow, and do not have access to more recent developments. The UCAF use case aims to leverage the Universal Cardholder Authentication Field to carry more data as part of the transaction flow. The DPD use case covers the recently introduced Digital Payment Data, a container able to carry all the data needed as part of the transaction flow.

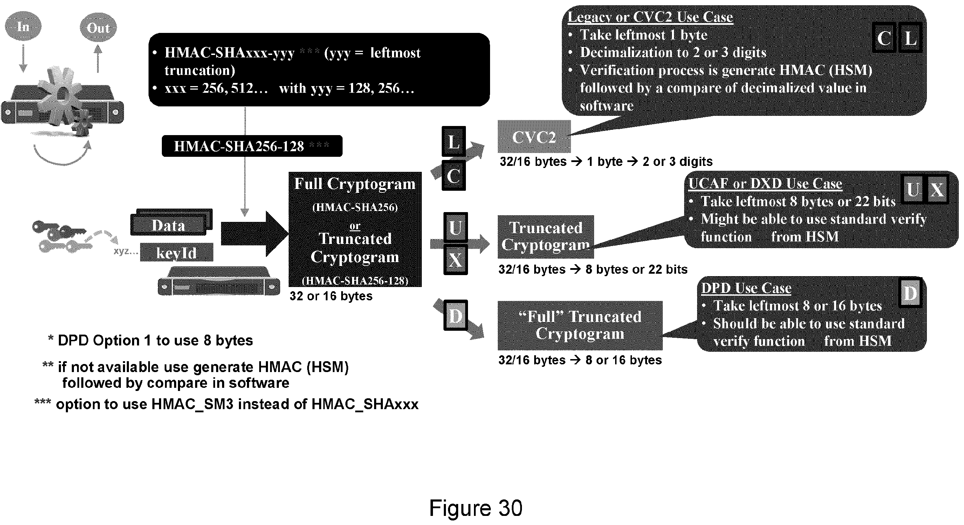

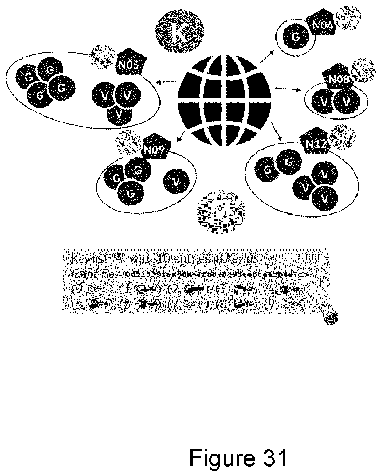

A full set of cryptographic mechanisms is shown in Figure 30. Key management is discussed with reference to Figure 31. There are two aspects to key management in this model: management of the keys themselves, including their generation and delivery to the HSMs associated with the nodes, and management of the key lists, including their generation, distribution, activation and deactivation. The key lists are sensitive assets while keys are considered as secret assets - the key lists define the keys to be used for generation and validation of cryptograms. Keys require end to end security with secure transport of the keys using wrapping/unwrapping techniques when loading the keys in HSMs. Their use should not be compromised by the key lists in case an attacker would like to change the content of a key list in order to alter the key selection process. The integrity of key lists is guaranteed by the seals - a seal is provided for a key list by the generating party or an associated trusted party, will involve a suitable cryptographic process (such as HMAC with an appropriate dedicated key or using for example a digital signature generated using asymmetric algorithms such as RSA, ECC, SM2...), and has the effect that any relevant part of the system can have confidence that the key list was generated by an appropriate party and has not been modified. In addition, the key list seals can be used in the generation and validation of cryptograms to secure the credentials.

Different control models are possible. There may be centralised control, with a central service generating keys and key lists, and distributing these to the different nodes. There however also may be localised control if dedicated processes are required at a particular node. This may in particular apply if there are specific requirements for a particular country - for example, on-soil regulations or restrictions on export of cryptographic material. This may also apply if there is a proprietary mechanism needed for HSM management - for example, with a particular cloud service provider. This need not be node-limited - it could apply to regional control with a central service within a region (this may be particularly appropriate where there is a specific security model for a particular country to meet local legal requirements). There may also be a hybrid or composite model, in which some key and key list provisioning is central, whereas some is local - there may also be a distributed model in which distributed peers together assume the role of a central service.

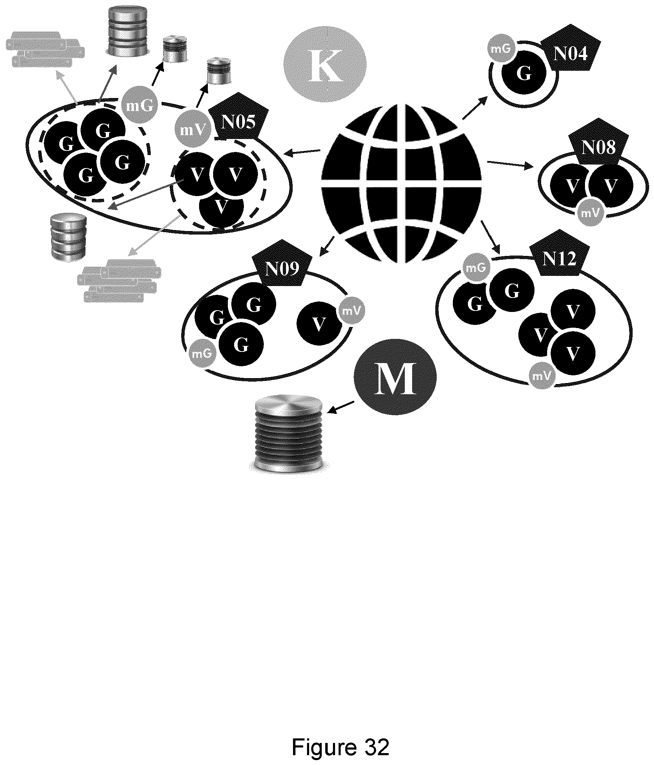

Monitoring is shown in general terms in Figure 32. Here, monitoring is complementary to security actions taken directly in a service to prevent fraud or misuse (such as the basic purpose of the service - generation of a credential using a cryptogram with subsequent validation). Such monitoring aims to detect security anomalies associated with a transaction - it can then trigger appropriate reaction mechanisms to contain any security risk and identify any attacker. In principle, this may have both local and central aspects. It is found that a hybrid approach is particularly effective in order both to provide effective detection of any issue and to produce reaction effective to counter risks associated with a fully distributed architecture.

There are three types of issue to be addressed by monitoring in such a system: integrity of the distributed system; generation of transaction credentials; and validation of transaction credentials. As transaction credentials may be generated or validated anywhere, it is important to have effective monitoring across the whole distributed system. An exemplary risk is that of misuse by an attacker of genuine transaction credentials generated by a generation service G in a node, in particular by an attempt to validate in multiple validation services in other nodes - this would be an issue if a validation service V did not have effective visibility of actions taken by validation services V in other nodes of the distributed system.

While monitoring is important to maintain the integrity of the system, it is also important to limit the amount of messaging that results to ensure that the system is scalable and will not be overloaded by the monitoring process. It is therefore desirable for messaging out of nodes to be limited to that genuinely necessary to address threats and for nodes to store information locally to allow effective use of the results of monitoring.

The form of token described above can be adopted effectively directly, with LTC value used instead of ATC - other aspects translate directly. However, a further form of this distributed architecture is better supported by a further embodiment of this token. In this further form of the architecture, an additional encryption layer may be added to allow credentials to be protected over an extended period of time - additional transaction related information may also be included in a common encryption envelope with the credential. This extended period of time may be much longer than the period over which credentials can be validated after generation. Use of such an additional encryption layer would allow transaction credentials to be stored securely and efficiently so that they and other transaction related information can be used in the future, for example to establish a linkage between a new transaction and a prior transaction (for example, in the processing of a refund, or a follow-on transaction after a pre-authorisation). It should be appreciated that comparable benefits may be obtained by use of obfuscation rather than encryption - this is described further below with relevance to embodiments of the disclosure. When credentials are provided after generation, they may then be provided in a message containing an encrypted part and an unencrypted part. The encrypted part may contain the credential along with other sensitive transaction data. The unencrypted part may contain information that will allow the transaction to be identified and that will enable a node of the system to decrypt the encrypted envelope.

To do this, in addition to providing credential generation G and credential validation V as services to clients, two more services would then be provided: encryption service E and decryption service D. This arrangement is shown in Figure 33. Other features are essentially as before - again key management K and monitoring M can be considered as services both locally at a node and across the system, and access control (not shown) will typically be required to allow access to a service. Additional key management activity would be required for the encryption and decryption service, but the strategy for this may differ because of the different timescales involved.

As before, a node 80 may be provided as a single server or as a plurality of conventional servers (which will contain their own processors and memories - not shown - along with other components as would normally be found in a server). The node 80 has access to a plurality of hardware security modules 85 (HSMs), adapted to hold cryptographic material in the form of keys needed to perform cryptographic functions and to perform cryptographic functions securely, along with access to data storage 84.

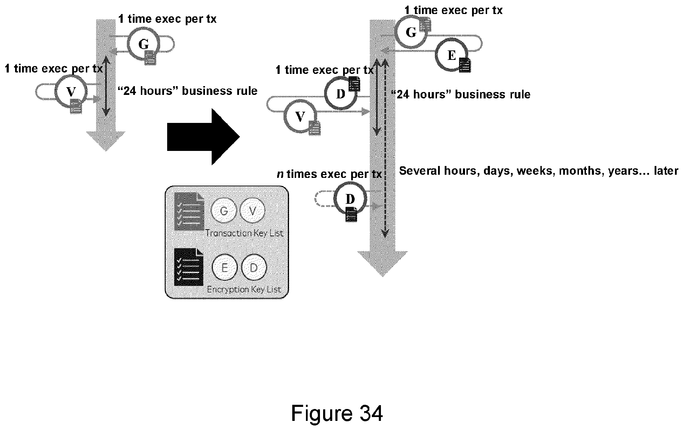

The encryption service E is adapted to encrypt data including the credential after generation of the credential. As shown in Figure 34, the decryption service D is used to decrypt such encrypted data to allow a credential to allow it to be validated, but also at a later time to allow transaction information to be used where necessary, typically where required by a further transaction. While validation of a credential will only be required once in performing a transaction, identification of and reference to transaction data elements may take place a number of times, so the keys used in the encryption and decryption process need to remain available for a long period of time. As will be described further below, encryption and decryption are not reliant on the validation process and decryption may be carried out many times after (and even before) validation. As can also be seen in Figure 34, the credential generation G and validation V services have one set of keys, and the encryption E and decryption D services have another set of keys.

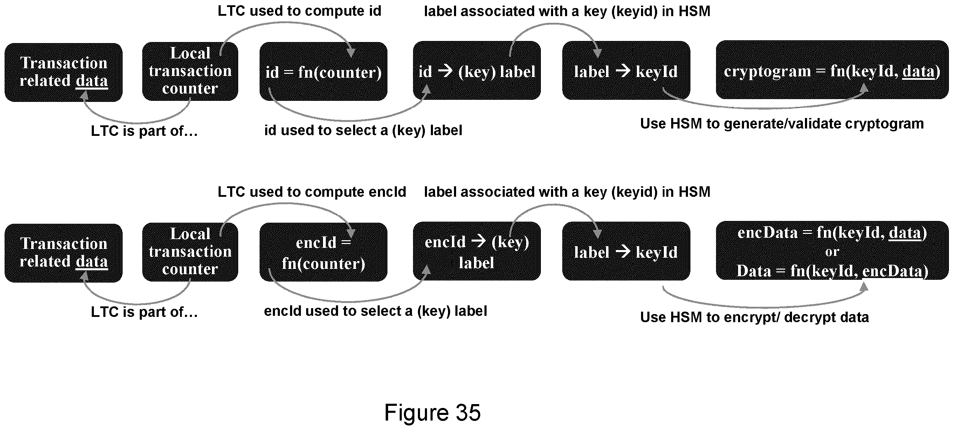

The overall approach taken to key identification and use adopted in the generation of a credential (in this case, a cryptogram) can also be used for encryption too, but with a different set of keys that vary much more slowly. The approach to key selection used for generation is as generally set out earlier in this specification and summarised in Figure 35. Transaction related data is established, including a local transaction counter (LTC) value established at the node. The LTC is used as the input to a function id, with function id being used to select a label. This label is associated with a key - keyid - in the relevant HSM. This key is used by the HSM to generate a cryptogram operating on relevant data (here, specific transaction data).

This approach can be used not only to select a key for generating the credential - the transaction key - but also to select a key for encryption of data - the encryption key. The same steps can be used - the local transaction counter can again be used to compute an encid function (which may even be the same id function as for credential generation), and this is used to select a key label. The key label here refers to a key from a different key list - an encryption key list, rather than a transaction key list. The key indicated by the label in the relevant HSM is used to encrypt the data itself.

While the same architecture is reused for each level of encryption, there are differences between the use of the transaction key list and the encryption key list. The transaction key list key references have a limited lifetime (for example, 24 hours) and are rotated regularly. As a result, the keys themselves are often changed. A transaction key list is identified by a combination of node identifier and transaction key list reference. The encryption key list key references will be chosen to have much longer lifetimes (possibly months or years). In the light of this long lifetime, an encryption key may be heavily used, but as a pseudo-random element is included as part of the data being encrypted using that key, any associated security risk in having numerous uses of the same encryption key for data protection is reduced. The identification of an encryption key list is done using its encryption key list reference allowing to retrieve the corresponding active encryption key list uniquely identified by its key list identifier.

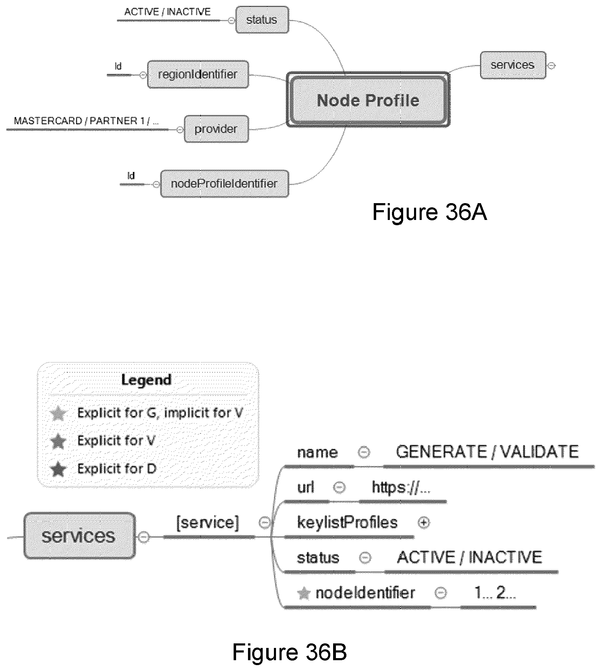

Nodes themselves may have a node profile, as is shown in Figures 36A and 36B. This allows for nodes to be created, configured and managed, for keys and key lists and their use by services at nodes to be defined and determined, for requests to be routed to appropriate nodes and for nodes to be monitored. The top level of the node profile is shown in Figure 36A - this indicates a unique identifier of a node profile, a region identifier and a provider identifier, an indication of the services provided by the node and its general status. Note that for example if a node is not permitted to validate, it can only decrypt existing service outputs and not validate credentials, and that provider information may be used to restrict access to decryption capabilities (so that partners may only be able to decrypt what they have generated and encrypted, whereas the transaction scheme provider has the ability to decrypt all encrypted data). This control of which nodes can perform which functions is relevant to the further token embodiment which will be described further below.

Figure 36B illustrates the profile of a service within a node profile. The node profile defines for each service the following: the type of service; a URL to access it; an array of key list profiles supported by that service; the status of the service; and the node identifier.

Different algorithms will generally be used for generation/validation and for encryption/decryption. Generation and validation in approaches described above involve generating an output from a significant amount of data (and with possibly varying format) - a keyed-hash function will typically be appropriate here, and validation involves recreating the same hash and comparing it with the supplied value. For encryption/decryption, the original input needs to be recovered from encrypted data by the decryption process, so a block cipher may be a logical choice.

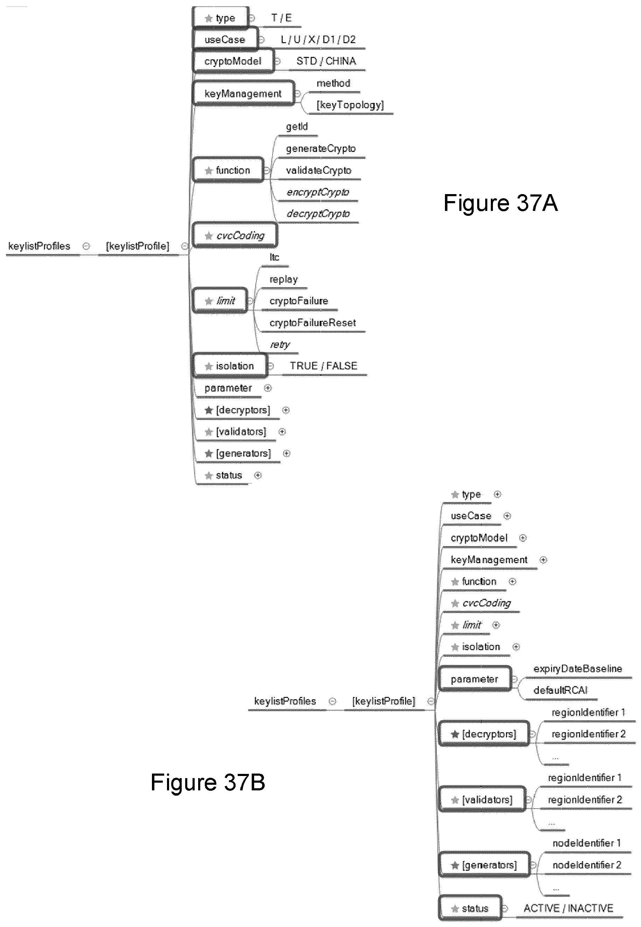

As shown in Figures 37A and 37B, the key list profile is used to configure the key list. It contains the following elements:

- Type (transaction or encryption)
- Use Case supported by the key list
- Crypto Model (for example, standard or country-specific)
- Key Management - this provides both the key management method, and relevant key topology identifier(s).
- Function - the different function identifiers for the service for the key list.
- CVC coding (in use cases where this is required)
- Limit - limits defined for services using the key list
- Isolation - this is set to true when there is only a single node allowed to validate the generated transaction credentials (or to decrypt the message containing them)
- Parameter - list of conditional parameters defined for the service using the key list
- Decryptors - array of decryption nodes (here identified using region identifier) for a given generation (or encryption) node
- Validators - array of validation nodes for a given generation node
- Generators - array of generation nodes for a given validation node
- Status - whether the relevant use case is active or inactive.

As discussed above, while the same approach to identification and selection of keys is used, the approach to key rotation differs significantly because of the different use cases - generation and validation requires a relatively rapid change (24 hour timescale) in keys but allows for significant key recycling, but encryption and decryption allows for much longer periods of key validity and it may be desirable to avoid key recycling altogether.

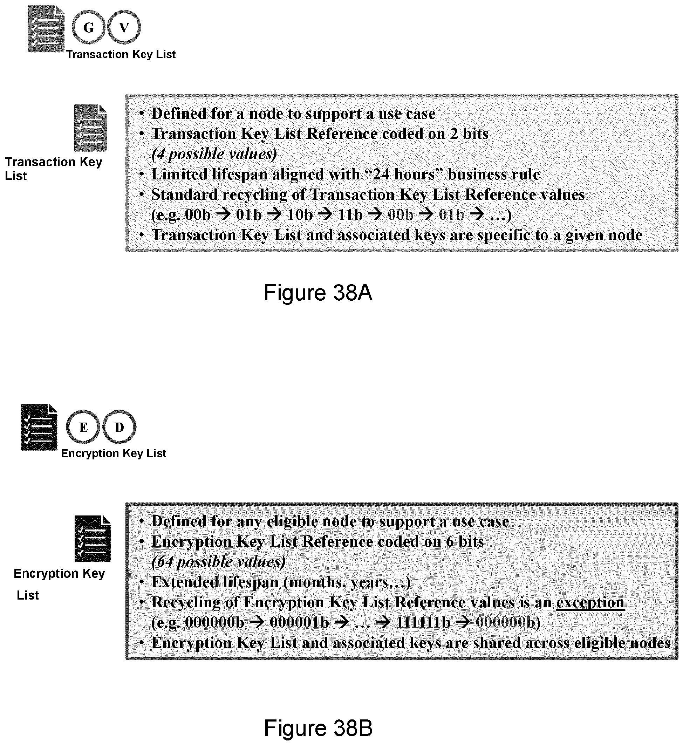

This may be achieved by using a longer key list reference for the encryption key list (say, 6 bits) rather than for the transaction key list (identified as 2 bits above), along with the much longer period of validity for the encryption key list rather than the transaction key list (months or years, rather than 24 hours). Significant differences between the key lists are set out in Figure 38A, showing the transaction key list, and Figure 38B, showing the encryption key list. The transaction key list reference here has up to four values and will cycle very regularly, while the encryption key list reference has up to sixty-four values and may never need to cycle at all - recycling is certainly an exception for the encryption key list, whereas it is standard operation for the transaction key list. As noted above, the other significant difference is that each transaction key list is defined for a specific node, whereas the encryption key list is defined for a list of eligible nodes which may change over time, with encryption key lists and the associated keys being shared across the eligible nodes.

This "eligible nodes" approach allows sufficient flexibility to support a range of use models. For example, the transaction scheme provider may have nodes included on every list of eligible nodes to ensure that the transaction scheme provider can decrypt mapping from any node. Restrictions can be applied over this to meet, for example, national on-soil requirements for encrypted data. This may be combined with partner nodes (for example, for a payment service provider) having access to all their own encryption keys and key lists to allow them to operate their own nodes fully.

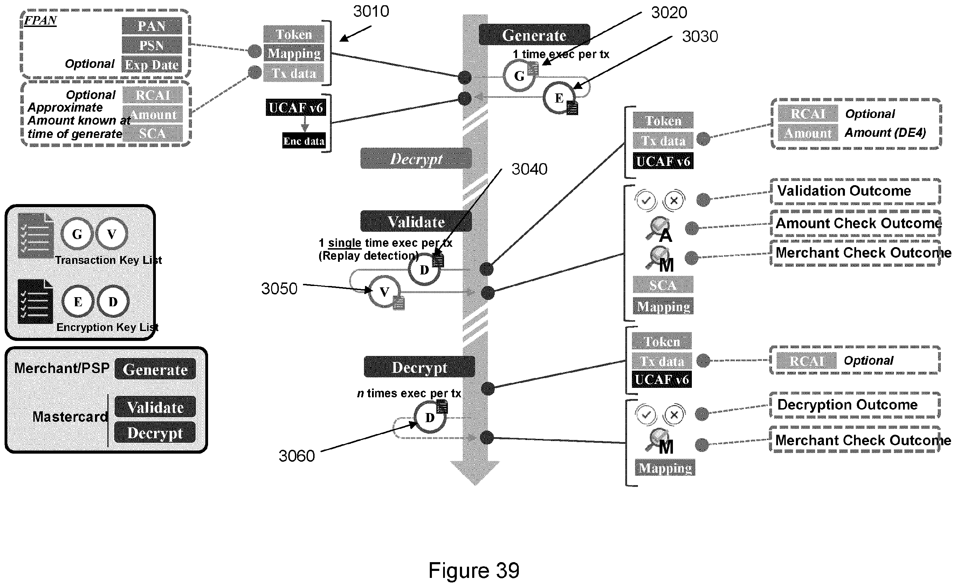

Figure 39 summarises the use cases. The original service request 3010 comprises mapping data - PAN, PSN and (optionally) expiry date - along with transaction data - (optionally) RCAI to identify the merchant, transaction amount and a strong cardholder authentication flag - along with a token associated with the PAN for generation 3020 of a credential, which is followed by encryption 3030 to form an encrypted data object 3030. This can be encrypted at any subsequent time - whether before or after validation - by a node that is permitted access to the encryption keys. Here, the first decryption process 3040 takes place when the encrypted data object is provided with the token and transaction data for validation. The validation process 3050 that follows - and which can occur only once - establishes a validation outcome, provides a check on the amount and the merchant, and reveals the strong cardholder authentication flag and the mapping information, allowing for authorization of the transaction. There may be other decryption events - one is shown here after credential validation, but potentially taking place before it - which will also provide the token and the encrypted data object, but it may not provide the same transaction data (though the RCAI or another merchant identifier may persist). Such a decryption event 3060 will provide a determination of whether decryption is successful (and whether the message has integrity) and a merchant check outcome and will reveal the mapping information, but it will not enable validation of the cryptogram carried as part of the transaction credentials.

Certain considerations relating to token use may apply to either of these approaches. One is that because of the distributed nature of the architecture, it becomes strongly desirable to minimise the use of any retry mechanisms, or any such mechanisms which can lead to processing delays or false rejections - as the architecture is intended for massively parallel processing of transactions, this would provide a significant burden on the system and could lead to vulnerabilities. This can be addressed by allowing individual nodes to process only a limited number of transactions a day for a particular PAN/token - in this way, the token may be carrying an actual rather than a partial LTC value, and the processing loop to provide and rank LTC candidate values may be bypassed altogether, or in other cases limited to a small number of iterations at most. However, in the case described from Figures 33 to 39, it is necessary to carry some form of Node Identifier with the token because this may determine which nodes are able to perform the validation process.

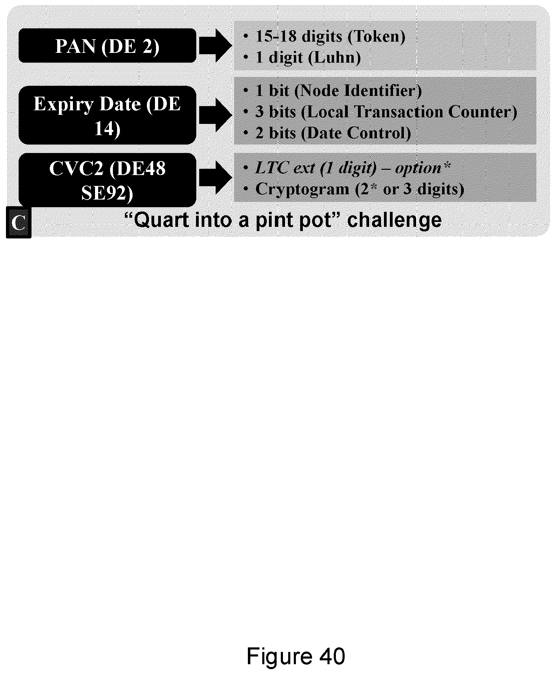

As shown in Figure 40, the easiest place to carry this additional information is in the Dynamic Expiry Date field - 1 bit will provide an adequate Node Identifier, but to achieve this 1 bit may need to be sacrificed from elsewhere. The easiest place to provide an additional bit is from the LTC - even though it is desirable for the whole LTC to be carried in the token. Lowering the number of LTC bits from 4 to 3 would limit a node to 8 transactions a day - this is a possibility, though a further option (repurposing part of the cryptogram) is also illustrated as an alternative in Figure 40 and described further below.

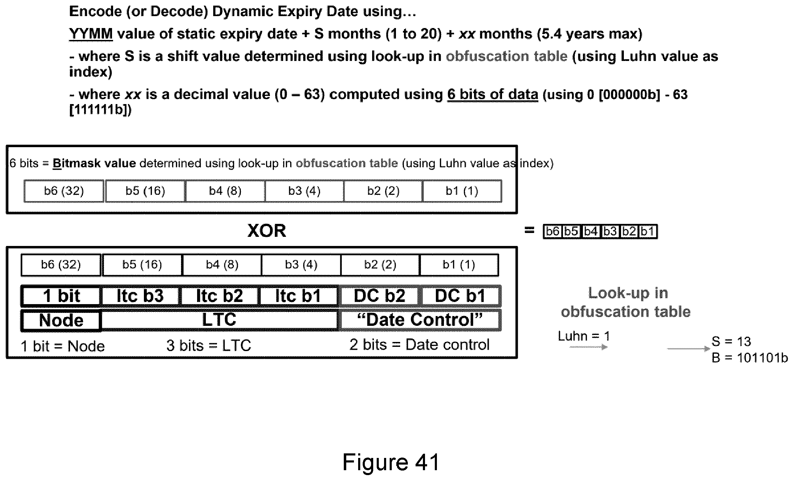

The date control bits are used exactly as for the embodiment described above, and they enable a deterministic process to be carried out to recover the generation date prior to validation of the cryptogram - here, provided in the dynamic CVC2. Retry is also avoided. One potential issue is that the format of the Expiry Date field may become more predictable - particularly in the case of a limited number of transactions, and if the generating node is for any reason identifiable. A mechanism that can be used here is to obscure the Dynamic Expiry Date by using an obfuscation table - in some embodiments, such obfuscation may be used as an alternative to the encryption process described in Figures 33 to 39 to provide security in contexts where it is not possible to convey sufficient information to use such an encryption process. The approach described above is to take the static expiry date, and then from the "next month" date add a computed value using 6 bits from LTC (4 bits) and date control (2 bits) - the embodiment shown in Figures 40 and 41 still uses 6 bits for this purpose, but these are a node identifier (1 bit), LTC (3 bits) and date control (2 bits). In order to obscure these 6 bits, the Luhn value from the PAN (also provided as part of the token) is used as the index for an obfuscation table, providing a shift value. This shift value - also a 6-bit value - is used not only to shift the decimal value but also to XOR the computed value to reduce predictability.

An example of this approach is described as follows. A credential needs to be generated for a token with PAN of 5432999912340007 (so the Luhn value is 7) and with Static Expiry Date of 2312. Let us say that this is UTC Date 210331, with generation on node 0, and that this is the third transaction on the day (when the first transaction used LTC value set to 0 and the second a LTC value set to 1), so LTC in binary is 010. Let us say that the obfuscation data for Luhn value equal to 7 provides a shift value of 10, and hence a binary bitmask B of 101110. The cryptogram is then computed (say that this gives a value of 421) here. All the information required for this architecture can now be provided, and a date control computed - here this is found to be 11 in binary (UTC date 2021/03/31, baseline 2023/12/01 from static expiry date, so MOD 4 value is 3). The Dynamic Expiry Date data is calculated using the bitmask (computed value XOR bitmask) - this is 001011 XOR 101110, equal to 100101 in binary and 37 in decimal. The shift value of 10 and the revised computed value are both added to the static expiry date to give a Dynamic Expiry Date of 2711 (47 months displaced from the static expiry date).

Let us say that the transaction is submitted for validation on the next day, 1st April 2021. The PAN is available as part of the token, and the Dynamic Expiry Date of 2711 and the Dynamic CVC2 421 are also presented. The static expiry date is also known to be 2312.

The UTC Date for validation - which may be on node 0 or node 1 here - is 210401. Say that here a number of transactions have already been seen for this PAN - LTC 1 and 3 with key list 210331 and LTC 1 and 2 for key list 210401 for node 0.

The date control associated with the validation date can be calculated using the static expiry date - here, that gives a binary date control of 10. The obfuscation data can be found as before, as the Luhn value is known. This allows the date control to be computed by reversing the XOR calculation to extract the unshifted Dynamic Expiry Date information - that this gives a date control of 11, as previously indicated. Comparing the date controls (which are different by 1) is sufficient to show that generation must have taken place the day before validation, and that the LTC value must have been 010 (binary), that is 2 (decimal). This fits existing data, as an LTC value of 2 has not yet been seen. The key list for node 0 on 210331 can then be retrieved, and the CVC2 value validated using the appropriate key label. On validation, that LTC value can then be marked as used.

The approach indicated allows 8 transactions per day per token per node while still providing a full LTC value. A greater number of transactions can be used if only 2 digits of cryptogram are used, rather than 3, liberating a further digit for LTC use. While this in principle increases the risk of guessing attack (as 2 digits are easier to guess than 3 digits), it should be noted as discussed above that this system is largely opaque to attackers as it does not involve consumer cardholders directly. The "free" digit can be combined with the 3 bits of LTC in the Dynamic Expiry Date field to extend the number of LTC values that can be used - the situation can be indicated in the transaction key list using a new field (keyList.limit.extendedLtc). This can have the following values:

- Value set to 8 = No extended LTC (Max 8 transactions using 3 digits cryptogram)
- Value set to 0 = All LTC values to be extended with maximum 80 transactions per day (LTC 0 to 79 in decimal, which represents 000/0 to 111/9 in the form xxx/y, where xxx is the three bits value from the Dynamic Expiry Date and y is the one digit decimal value from the CVC field using a 2 digits cryptogram
- Value set to n (1 to 7) = All LTC values below threshold (n) use a 3 digits cryptogram while allowing a maximum (8 - n) * 10 transactions using 2 digits cryptogram on a given day for a given token using a given node

This last approach allows a three digits cryptogram to be used most of the time, with a two digits cryptogram possible when there is very heavy use of the token - this approach provides a good balance of flexibility and security.

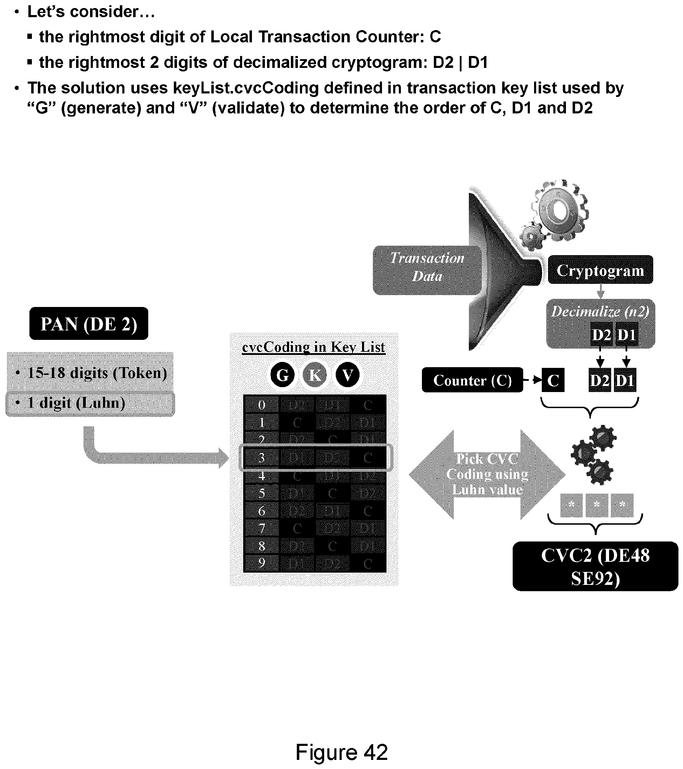

As shown in Figure 42, it should be noted that Luhn-based obfuscation may be used not only in the Dynamic Expiry Date field, but also in the CVC field. The Luhn value may be used to access a lookup table which orders the digits of the CVC field - this may be used for example in the case of a 2-digit cryptogram to provide greater obfuscation. In this case, it would not readily apparent which digits of the field are in fact the cryptogram, providing an additional measure of security.

As the skilled person will appreciate, the embodiments described above are exemplary, and further embodiments falling within the spirit and scope of the disclosure may be developed by the skilled person working from the principles and examples set out above.

**Claims**

1. A method of processing information relating to an event marked in a data record associated with an entity, wherein the data record comprises a date field and a cryptographic record field, the method comprising:

determining whether the date field holds a true date or a dynamically generated date by matching the date field against a true date record;
if the date field holds the true date, processing the data record according to a first processing path for static data for the entity, but if the date field holds the dynamically generated date, processing the data record according to a second processing path for dynamic data generated for the event;
in processing the data record according to the second processing path:

extracting a date control from the date field, and determining a data record creation date from the date control;

obtaining an event counter from the date field using the data record creation date; and
using the event counter and the data record creation date to validate a cryptographic record in the cryptographic record field.

2. The method of claim 1, wherein a key determined by the data record creation date is used to validate the cryptographic record.

3. The method of claim 1 or claim 2, wherein the event is a service instance.

4. The method of claim 3, wherein the event is generation of a transaction record or transaction credentials for a transaction performed by the entity.

5. The method of claim 4, wherein the event counter is a transaction counter.

6. The method of claim 4 or claim 5, further comprising obtaining a value used as an unpredictable number by a deterministic process from the data record creation date and using the unpredictable number in validation of the cryptographic record.

7. The method of any preceding claim, wherein extracting data from the date field comprises using a bitmask on values stored in the date field, wherein the value of the bitmask is determined by an entity identifier for the entity.

8. The method of claim 7 where dependent on any of claims 4 to 6, wherein the entity identifier is a primary account number for the entity, where the entity is a cardholder represented by a cardholder account.

9. The method of claim 8, wherein the value of the bitmask is retrieved from a lookup table, where a Luhn number of the primary account number is used to obtain the value of the bitmask.

10. The method of any of claims 7 to 9, wherein the value of the bitmask is also used as a shift value for the event counter, wherein retrieving the event counter comprises retrieving a value from the date field and correcting for the shift value.

11. The method of any of claims 4 to 10, wherein the method further comprises determining whether the event counter has been extended by detecting an extended event counter flag, and if the event counter has been extended, determining that a part of the cryptographic record field is used for an extended event counter value and that the remainder of the cryptographic record field is used for an abbreviated cryptographic record.

12. The method of claim 11 where dependent on claim 4, wherein the entity identifier is a primary account number for the entity, where the entity is a cardholder represented by a cardholder account, and wherein a Luhn number of the primary account number is used to determine functions of places in the cryptographic record field.

13. A computing node comprising a processor and a memory, wherein the processor is programmed to perform the method of any of claims 1 to 12 using the memory.

14. A method of communicating information relating to an event using a data record associated with an entity, wherein the data record comprises a date field and a cryptographic record field, the method comprising:

identifying a data record creation date;
using the data record creation date and a true date record to generate a date control;
using the date control and an event counter to generate a dynamically generated date and storing it in the date field;
using the event counter and the data record creation date to generate a cryptographic record and storing it in the cryptographic record field; and
communicating a message including the data field, wherein a recipient of the message with access to the true date record can recover the data record creation date and the event counter from the dynamically generated date and can validate that the elements are correctly recovered by recalculating the cryptographic record from the recovered data record creation date and the event counter and matching the recalculated cryptographic record with the cryptographic record recovered from the data field.

**EP 4 175 216 A1**

15. The method of claim 14, wherein the event is generation of a transaction record or transaction credentials for a transaction performed by the entity and the event counter is a transaction counter, the method further comprising creating an unpredictable number by a deterministic process from the data record creation date and using the unpredictable number in generation of the cryptographic record.

**25**

Figure 1

Figure 2

Figure 3

Figure 4

| **Expiry Date** | | | |
|:---:|:---:|:---:|:---:|
| Y | Y | M | M |

# Figure 5

# Figure 7

| | | | 6 bits | 6 bits | 7 bits | 8 bits | 8 bits | 9 bits |
|---|---|---|---|---|---|---|---|---|
| date AND TIME | 05/02/2018 10:17:00 PM | | | | | | | |
| Number of months | 7 | Max Number of months | 63 months | 63 months | 127 months | 255 months | 255 months | 511 months |
| Next month (yy/mm) | 1806 | | | | | | | |
| Dynamic Expiry Date | 1901 | Dynamic Expiry Date | 2309 | 2309 | 2901 | 3909 | 3909 | 6101 |
| | | #bits ATC | 3 bits | 2 bits | 3 bits | 3 bits | 4 bits | 4 bits |
| | | #bits UN | 3 bits | 4 bits | 4 bits | 5 bits | 4 bits | 5 bits |
| | | Safe #years = 5 | 5.3 years | 5.3 years | 10.6 years | 21.3 years | 21.3 years | 42.6 years |
| | | #years (Japan) = 7 | | | | | | |

Any # above is at serious risk (PSP + Expiry Date Validation by APIs)

Figure 6

EP 4 175 216 A1

Figure 8

Figure 9

| Date (UTC) | PAN | ATC |
|---|---|---|
| YYYYMMDD (4 bytes BCD) | n digits (+ F) (X bytes BCD) | 0000 \| (4 bits) (1 byte HEX) |

**Input Buffer**

Y bytes

**One-way Function**

SHA256

**Output**

32 bytes

**UN**

4 bytes (LSB)

Figure 10

**IV** | Same concept as DTD
2 bytes | (Done by Server or Device)
*2-key Triple DES CBC MAC ISO/IEC 9797-1 alg=3*
*pad=2 (80 pad) over DTD Track data*

**UN**
4 bytes | **New process**

**ATC**
2 bytes | Same concept as DTD
(Done by Server or Device)
*ATC increment for each transaction*

| IV | UN | ATC |
|---|---|---|
| 2 bytes | 4 bytes | 2 bytes |

**Input Buffer**
8 bytes

**Session Key**
Key Type 21
Standard EMV derivation
process

**Crypto**
2-key Triple DES Encryption
(EDE) using ECB mode

**Output**
8 bytes

**CVC**
Decimalization (3 digits
LSD)
of 2 bytes (LSB)

Figure 11

Figure 12

Figure 13

Figure 14

**YYMM** value of static expiry date + *xx* months (5.4 years max)
where *xx* represents decimal values 0 to 63, or <u>6 bits of data</u>

(0 [000000b] to 63 [111111b])

| b6 (32) | b5 (16) | b4 (8) | b3 (4) | b2 (2) | b1 (1) |
|---------|---------|--------|--------|--------|--------|
| atc b4 | atc b3 | atc b2 | atc b1 | 1 bit | 1 bit |
| Partial ATC | | | | "Date Control" | |
| 4 bits = Partial ATC for Full ATC recovery | | | | 2 bits = Date control | |

Figure 15

| Partial ATC = 9 | 1001 | 221101 | <<< Static Expiry Date (YYMM01) | | | | | |
|---|---|---|---|---|---|---|---|---|
| Generate | | | | | | | | |
| | Baseline | # | MOD | | YYMM | Next | ATC\|MOD | | ExpD |
| 2021/03/22 | 2022/11/01 | 589 | 1 | 01 | 2211 | 2212 | 100101 | 37 | 2601 |

Figure 16

40

## Figure 17

| Data object | Length | Value |
|---|---|---|
| Amount, Authorized (Numeric) | 6 | '000000000000' |
| Amount, Other (Numeric) | 6 | '000000000000' |
| Terminal Country Code | 2 | '0000' |
| Terminal Verification Results | 5 | '0000000000' |
| Transaction Currency Code | 2 | '0000' |
| **Transaction Date** | **3** | **As input (YYMMDD)** |
| Transaction Type | 1 | '00' |
| **Unpredictable Number** | **4** | **As computed** |
| Application Interchange Profile | 2 | AIP (Management for SE / RP for CLOUD) |
| **Application Transaction Counter** | **2** | **Current value** |
| Card Verification Results | 6 | 'A50000000000' |

170a

172

**Session Key**

Key Type 21 (SE) or 28 (CLOUD)
Standard EMV derivation process

**Input Buffer (ARQC)**

x bytes

**Crypto**

2-key Triple DES CBC MAC
ISO/IEC 9797-1 alg=3 pad=2 (80 pad)

Use standard **ARQC** generation process with Retail MAC

171

**Output**

8 bytes

**CVC**

Decimalization (3 digits LSD)
of 2 bytes (LSB)

173

174

Figure 18

Figure 19

Figure 20

Figure 21

| ATC Value (decimal) | ATC value (binary) | Information | Delta | Proximity |
|---|---|---|---|---|
| 780 | 0000001100001100 | Highest used ATC | | |
| - | 000000110000xxxx | Masked Baseline | | |
| 777 | 0000001100001001 | Baseline | -3 | 1 |
| 793 (Shift up 1x) | 0000001100011001 | Baseline + 16 | +13 | 2 |
| 761 (Shift down 1x) | 0000001011111001 | Baseline - 16 | -19 | 3 |
| 809 (Shift up 2x) | 0000001100101001 | Baseline + 32 | +29 | 4 |
| 745 (Shift down 2x) | 0000001011101001 | Baseline - 32 | -35 | 5 |
| 825 (Shift up 3x) | 0000001100111001 | Baseline + 48 | +45 | 6 |
| 729 (Shift down 3x) | 0000001011011001 | Baseline + 48 | -51 | 7 |

## Figure 22A

| ATC Value (decimal) | ATC value (binary) | Information | Delta | Proximity |
|---|---|---|---|---|
| 777 | 0000001100001001 | Baseline | -3 | 1 |
| 793 (Shift up 1x) | 0000001100011001 | Baseline + 16 | +13 | 2 |
| 761 (Shift down 1x) | 0000001011111001 | Baseline - 16 | -19 | 3 |
| 809 (Shift up 2x) | 0000001100101001 | Baseline + 32 | +29 | 4 |

## Figure 22B

Node

Access Control

Generate

Validate

Key Management

Monitor

Figure 23

Figure 24

Figure 25

Figure 26

Figure 27

Yellow  9F6EBEE120A9CB96
84B3DA12FE7DDF0C

Blue  7E8E1BEB22B9DE02
9F29C4C8F227C07A

Green  16702EED177646ED
ED1AF510FE40FFD6

Grey  8FEB12E02F4EB7AA
7ED6337CC7BF071B

Red  1EAE47824BE75ECD
F1862F2BDDD270D0

**Key list "A" with 10 entries in *KeyIds***
*Identifier* 0d51839f-a66a-4fb8-8395-e88e45b447cb
(0, ), (1, ), (2, ), (3, ), (4 ),
(5, ), (6, ), (7, ), (8, ), (9 )

**Key list "B" with 10 entries in *KeyIds***
*Identifier* 515f3fea-337d-41ee-8681-b90af4d84071
(0, ), (1, ), (2, ), (3, ), (4 ),
(5, ), (6, ), (7, ), (8, ), (9 )

= Seal

## Figure 28

Figure 29

**In** · **Out**

- HMAC-SHAxxx-yyy *** (yyy = leftmost truncation)
- xxx = 256, 512… with yyy = 128, 256…

HMAC-SHA256-128 ***

**Data**
**keyId**
xyz…

**Full Cryptogram**
(HMAC-SHA256)
*or*
**Truncated Cryptogram**
(HMAC-SHA256-128)
32 or 16 bytes

**L** **C**
**U** **X**
**D**

**Legacy or CVC2 Use Case** **C** **L**
- Take leftmost 1 byte
- Decimalization to 2 or 3 digits
- Verification process is generate HMAC (HSM) followed by a compare of decimalized value in software

**CVC2**
32/16 bytes → 1 byte → 2 or 3 digits

**UCAF or DXD Use Case** **U** **X**
- Take leftmost 8 bytes or 22 bits
- Might be able to use standard verify function from HSM

**Truncated Cryptogram**
32/16 bytes → 8 bytes or 22 bits

**DPD Use Case** **D**
- Take leftmost 8 or 16 bytes
- Should be able to use standard verify function from HSM

**"Full" Truncated Cryptogram**
32/16 bytes → 8 or 16 bytes

* DPD Option 1 to use 8 bytes

** if not available use generate HMAC (HSM) followed by compare in software

*** option to use HMAC_SM3 instead of HMAC_SHAxxx

Figure 30

Figure 31

Figure 32

EP 4 175 216 A1

Figure 33

56

**1 time exec per tx**

G

**1 time exec per tx**

V

**"24 hours" business rule**

Transaction Key List
G V

Encryption Key List
E D

**1 time exec per tx**

G

E

**1 time exec per tx**

D

V

**"24 hours" business rule**

*n* times exec per tx

D

Several hours, days, weeks, months, years... later

Figure 34

LTC used to compute id     label associated with a key (keyid) in HSM

| Transaction related __data__ | Local transaction counter | id = fn(counter) | id → (key) label | label → keyId | cryptogram = fn(keyId, __data__) |

LTC is part of...     id used to select a (key) label     Use HSM to generate/validate cryptogram

LTC used to compute encId     label associated with a key (keyid) in HSM

| Transaction related __data__ | Local transaction counter | encId = fn(counter) | encId → (key) label | label → keyId | encData = fn(keyId, __data__) or Data = fn(keyId, encData) |

LTC is part of...     encId used to select a (key) label     Use HSM to encrypt/ decrypt data

Figure 35

Figure 36A

Figure 36B

Figure 37A

Figure 37B

**Transaction Key List**

- **Defined for a node to support a use case**
- **Transaction Key List Reference coded on 2 bits**
  *(4 possible values)*
- **Limited lifespan aligned with "24 hours" business rule**
- **Standard recycling of Transaction Key List Reference values**
  **(e.g. 00b → 01b → 10b → 11b → 00b → 01b → ...)**
- **Transaction Key List and associated keys are specific to a given node**

## Figure 38A

**Encryption Key List**

- **Defined for any eligible node to support a use case**
- **Encryption Key List Reference coded on 6 bits**
  *(64 possible values)*
- **Extended lifespan (months, years...)**
- **Recycling of Encryption Key List Reference values is an <u>exception</u>**
  **(e.g. 000000b → 000001b → ... → 111111b → 000000b)**
- **Encryption Key List and associated keys are shared across eligible nodes**

## Figure 38B

Figure 39

PAN (DE 2)
- 15-18 digits (Token)
- 1 digit (Luhn)

Expiry Date (DE 14)
- 1 bit (Node Identifier)
- 3 bits (Local Transaction Counter)
- 2 bits (Date Control)

CVC2 (DE48 SE92)
- *LTC ext (1 digit) – option\**
- Cryptogram (2\* or 3 digits)

C "Quart into a pint pot" challenge

Figure 40

**Encode (or Decode) Dynamic Expiry Date using...**

**YYMM value of static expiry date + S months (1 to 20) + xx months (5.4 years max)**

**- where S is a shift value determined using look-up in** obfuscation table **(using Luhn value as index)**

**- where xx is a decimal value (0 – 63) computed using 6 bits of data (using 0 [000000b] - 63 [111111b])**

6 bits = **Bitmask value** determined using look-up in obfuscation table (using Luhn value as index)

| b6 (32) | b5 (16) | b4 (8) | b3 (4) | b2 (2) | b1 (1) |
|---------|---------|--------|--------|--------|--------|

**XOR**

= | b6 | b5 | b4 | b3 | b2 | b1 |

| b6 (32) | b5 (16) | b4 (8) | b3 (4) | b2 (2) | b1 (1) |
|---------|---------|--------|--------|--------|--------|

| **1 bit** | **Itc b3** | **Itc b2** | **Itc b1** | **DC b2** | **DC b1** |
|-----------|------------|------------|------------|-----------|-----------|
| **Node** | **LTC** | | | **"Date Control"** | |

| 1 bit = Node | 3 bits = LTC | 2 bits = Date control |
|--------------|--------------|------------------------|

Look-up in
obfuscation table

Luhn = 1

S = 13
B = 101101b

## Figure 41

- Let's consider...
  - the rightmost digit of Local Transaction Counter: C
  - the rightmost 2 digits of decimalized cryptogram: D2 | D1
- The solution uses keyList.cvcCoding defined in transaction key list used by "G" (generate) and "V" (validate) to determine the order of C, D1 and D2

Figure 42

| | Europäisches Patentamt European Patent Office Office européen des brevets | **EUROPEAN SEARCH REPORT** | Application Number EP 21 20 4884 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 872 733 A1 (MASTERCARD INTERNATIONAL INC [US]) 1 September 2021 (2021-09-01) * paragraph [0006] – paragraph [0017] * * paragraph [0021] – paragraph [0088]; figures 2,12 * | 1-15 | INV. H04L9/08 G06Q20/40 |
| X | JAYASINGHE DANUSHKA ET AL: "Enhancing EMV Tokenisation with Dynamic Transaction Tokens", 20 July 2017 (2017-07-20), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 107 - 122, XP047420976, ISBN: 978-3-540-74549-5 [retrieved on 2017-07-20] * sections 2, 4; tables 2, 3; figure 2 * | 1-15 | |

TECHNICAL FIELDS SEARCHED (IPC)

H04L
G07G
G06Q

The present search report has been drawn up for all claims

| Place of search | Date of completion of the search | Examiner |
|---|---|---|
| Munich | 29 March 2022 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 4884

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2022

| Patent document cited in search report | Publication date | Patent family member(s) | Publication date |
|---|---|---|---|
| EP 3872733 A1 | 01-09-2021 | EP 3872733 A1 | 01-09-2021 |
|  |  | WO 2021173396 A1 | 02-09-2021 |

EPO FORM P0459

For more details about this annex : see Official Journal of the European Patent Office, No. 12/82

**EP 4 175 216 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020247093 A